# EUROPEAN PATENT APPLICATION

(11) **EP 4 842 080 A1**
(43) Date of publication of application: **18.11.2026**
(21) Application number: 25751040.4
(22) Date of filing: 07.01.2025
(51) Int. Cl.: H04W 52/02

(54) **COMMUNICATION METHOD AND COMMUNICATION APPARATUS**

(30) Priority: 08.02.2024 CN 202410178048; 08.08.2024 CN 202411093465
(71) Applicant: Huawei Technologies Co., Ltd., Shenzhen, Guangdong 518129 (CN)
(72) Inventor: KUANG, Yiru, Shenzhen, Guangdong 518129 (CN); XUE, Yifan, Shenzhen, Guangdong 518129 (CN)
(74) Representative: Körber, Martin Hans
(86) International application number: PCT/CN2025/070983
(87) International publication number: WO 2025/167438

(57) **Abstract**

This application provides a communication method and a communication apparatus. In a monitoring period of a first wake-up signal and/or in a wake-up time period indicated by the first wake-up signal, a terminal device may send a reference signal for uplink channel estimation to a network device and/or report measured downlink channel information to the network device, so that the network device may obtain channel information based on the reference signal and/or the measured downlink channel information. According to technical solutions in embodiments of this application, low power consumption of the terminal device can be ensured, and the network device can obtain the channel information, thereby ensuring communication performance.

## Description

This application claims priorities to Chinese Patent Application No. 202410178048.5, filed with the China National Intellectual Property Administration on February 8, 2024 and entitled "COMMUNICATION METHOD AND COMMUNICATION APPARATUS", and to Chinese Patent Application No. 202411093465.6, filed with the China National Intellectual Property Administration on August 8, 2024 and entitled "COMMUNICATION METHOD AND COMMUNICATION APPARATUS", both of which are incorporated herein by reference in their entireties.

### TECHNICAL FIELD

This application relates to the field of communication technologies, and more specifically, to a communication method and a communication apparatus.

### BACKGROUND

To reduce power consumption of a terminal device, the terminal device may monitor a wake-up signal by using a low-power small circuit. The wake-up signal is used for waking up the terminal device to perform paging message monitoring, random access, or the like. To ensure communication performance, the network device needs to obtain channel information, to perform high-quality scheduling. However, currently, there is no related technical solution for how to feed back the channel information to the network device when the terminal device monitors the wake-up signal by using the low-power small circuit. Therefore, both reducing power consumption of the terminal device and ensuring communication performance cannot be effectively balanced.

### SUMMARY

This application provides a communication method and a communication apparatus, to reduce power consumption of a terminal device and also ensure communication performance.

According to a first aspect, a communication method is provided. The method is applied to a terminal device side. For example, the method may be performed by a terminal device, or may be performed by a module (for example, a chip or a circuit) in the terminal device, or may be performed by a logical node, a logical module, or software that can implement all or some functions of the terminal device. This is not limited in this application.

The method includes: The terminal device sends first information to a network device in a first time period, where the first time period includes a monitoring period of a first wake-up signal and/or a wake-up time period indicated by the first wake-up signal, the first wake-up signal is used for waking up the terminal device, and the first information is used for obtaining channel information.

For example, the first information includes at least one of the following:
a periodic sounding reference signal (periodic sounding reference signal, p-SRS), a semi-persistent sounding reference signal (semi-persistent sounding reference signal, sp-SRS), semi-persistent channel state information (semi-persistent channel state information, sp-CSI) on a physical uplink control channel (physical uplink control channel, PUCCH), sp-CSI on a physical uplink shared channel (physical uplink shared channel, PUSCH), periodic channel state information (periodic channel state information, p-CSI) on the PUCCH, and the like. The p-CSI on the PUCCH includes at least one of the following:
p-CSI including L1-reference signal received power (L1-reference signal received power, L1-RSRP) on the PUCCH and p-CSI not including the L1-RSRP on the PUCCH.

According to the foregoing method, when operating in a wake-up mechanism, the terminal device can send a reference signal for uplink channel estimation to the network device and/or report measured downlink channel information to the network device, so that low power consumption of the terminal device can be ensured, and the network device can obtain the channel information, thereby ensuring communication performance.

With reference to the first aspect, in some implementations of the first aspect, that the terminal device sends the first information to the network device in the first time period includes: The terminal device skips sending the first information in the monitoring period of the first wake-up signal, and the terminal device sends the first information in the wake-up time period indicated by the first wake-up signal.

According to the foregoing method, the terminal device may skip sending the first information to the network device in the monitoring period of the wake-up signal, that is, the terminal device does not need to be specially woken up to send the first information, so that power consumption of the terminal device is very low.

With reference to the first aspect, in some implementations of the first aspect, that the terminal device skips sending the first information in the monitoring period of the first wake-up signal includes: The terminal device skips sending the first information in the monitoring period of the first wake-up signal and in a discontinuous reception (discontinuous reception, DRX) on duration time period (on duration time period).

Specifically, that the terminal device is in the monitoring period of the first wake-up signal and in the DRX on duration time period may be understood as that a current time domain position of the terminal device is in the monitoring period of the first wake-up signal and also in the DRX on duration time period.

According to the foregoing method, the terminal device may not monitor a physical downlink control channel (physical downlink control channel, PDCCH) in the DRX on duration time period, but still monitors the first wake-up signal, so that power consumption of the terminal device can be further reduced.

With reference to the first aspect, in some implementations of the first aspect, that the terminal device sends the first information to the network device in the first time period includes: The terminal device sends the first information at a first periodicity in the monitoring period of the first wake-up signal, and the terminal device sends the first information at a second periodicity in the wake-up time period indicated by the first wake-up signal, where the first periodicity is greater than the second periodicity.

The second periodicity is a configured periodicity for the first information in time domain.

For example, the first periodicity may be a multiple of the second periodicity. In this case, the first periodicity may also be referred to as a relaxed periodicity of the second periodicity, that is, the first periodicity is equal to the second periodicity multiplied by a relaxation factor. The relaxation factor may be preconfigured by a network for the terminal device, or may be specified in a protocol. This is not limited in this application.

In comparison with a case that the terminal device sends the first information at the configured periodicity in the monitoring period of the first wake-up signal, in the foregoing method, the terminal device may send the first information at the first periodicity greater than the configured periodicity, so that communication performance can be ensured, and power consumption of the terminal device can also be reduced to some extent.

With reference to the first aspect, in some implementations of the first aspect, the method further includes: The terminal device receives first indication information from the network device, where the first indication information indicates whether the terminal device sends the first information in the monitoring period of the first wake-up signal, the first indication information indicates whether the terminal device sends the first information in the monitoring period of the first wake-up signal and in the DRX on duration time period, or the first indication information indicates that the terminal device sends the first information at the first periodicity in the monitoring period of the first wake-up signal.

Alternatively, the first indication information indicates whether the terminal device sends the first information in the monitoring period of the first wake-up signal, or the first indication information indicates whether the terminal device sends the first information at the first periodicity in the monitoring period of the first wake-up signal.

With reference to the first aspect, in some implementations of the first aspect, if the first indication information indicates that the terminal device sends the first information in the monitoring period of the first wake-up signal, the first indication information further indicates that the terminal device sends, in the monitoring period of the first wake-up signal, first-type information included in the first information; or if the first indication information indicates that the terminal device sends the first information in the monitoring period of the first wake-up signal and in the DRX on duration time period, the first indication information further indicates that the terminal device sends, in the monitoring period of the first wake-up signal and in the DRX on duration time period, first-type information included in the first information.

With reference to the first aspect, in some implementations of the first aspect, if the first indication information indicates that the terminal device sends the first information in the monitoring period of the first wake-up signal, the method further includes: The terminal device skips sending, in the monitoring period of the first wake-up signal, second-type information included in the first information; or if the first indication information indicates that the terminal device sends the first information in the monitoring period of the first wake-up signal and in the DRX on duration time period, the method further includes: The terminal device skips sending, in the monitoring period of the first wake-up signal and in the DRX on duration time period, second-type information included in the first information.

According to the foregoing method, the terminal device may send, in the monitoring period of the first wake-up signal, only a part of multiple pieces of information included in the first information, or the terminal device sends, in the monitoring period of the first wake-up signal and in the DRX on duration time period, only a part of multiple pieces of information included in the first information, so that power consumption of the terminal device can be reduced.

With reference to the first aspect, in some implementations of the first aspect, the first-type information includes the p-CSI including the L1-RSRP on the PUCCH and/or the p-CSI not including the L1-RSRP on the PUCCH. The second-type information includes one or more of the following:
the p-SRS, the sp-SRS, the sp-CSI on the PUCCH, and the sp-CSI on the PUSCH.

With reference to the first aspect, in some implementations of the first aspect, the terminal device skips sending the first information in the monitoring period of the first wake-up signal includes: The terminal device skips sending the first information in the monitoring period of the first wake-up signal and not in the DRX on duration time period.

Specifically, that the terminal device is in the monitoring period of the first wake-up signal and not in the DRX on duration time period may be understood as that the current time domain position of the terminal device is in the monitoring period of the first wake-up signal and not in the DRX on duration time period.

According to the foregoing method, power consumption of the terminal device can be reduced.

With reference to the first aspect, in some implementations of the first aspect, the wake-up time period indicated by the first wake-up signal is a running time period of a first timer, and the first timer is started by the terminal device in response to detecting the first wake-up signal.

For example, the running time period of the first timer may be indicated by the first wake-up signal detected by the terminal device, or the running time period of the first timer may be preconfigured at the terminal device. This is not limited in this application.

According to the foregoing method, after detecting the wake-up signal, the terminal device may control sending of the first information by running a timer, and the network device does not need to dynamically indicate the sending and stopping of the sending of the first information, so that signaling overheads can be reduced.

With reference to the first aspect, in some implementations of the first aspect, the method further includes: The terminal device detects a first wake-up signal, where the first wake-up signal carries second indication information, and the second indication information indicates that the terminal device sends first information.

With reference to the first aspect, in some implementations of the first aspect, the method further includes: The terminal device receives third indication information from the network device, where the third indication information indicates that the terminal device stops sending the first information.

That the third indication information indicates that the terminal device stops sending the first information may be replaced as follows: The third indication information indicates that the terminal device does not send the first information.

Specifically, the second indication information may further indicate time at which the terminal device sends the first information, and the third indication information may further indicate time at which the terminal device stops sending the first information.

According to the foregoing method, the terminal device may send the first information based on the indication of the network device and stop sending the first information based on the indication of the network device, so that the sending of the first information can be more flexibly controlled.

Specifically, that the terminal device is in the monitoring period of the first wake-up signal includes at least one of the following:

The terminal device is in a state of monitoring the first wake-up signal, the terminal device is not in the wake-up time period indicated by the first wake-up signal, the terminal device is not in a running time period of a first timer, the terminal device operates by using the second module, the terminal device operates by using a wake-up circuit, the terminal device monitors the first wake-up signal, the terminal device is in a monitoring time period of the first wake-up signal, or the like.

Specifically, the monitoring period of the first wake-up signal may be used by the terminal device when one or more of the following conditions are satisfied:

Monitoring of the first wake-up signal is enabled, monitoring of the first wake-up signal is configured, monitoring of the first wake-up signal is used, monitoring of the first wake-up signal is activated, or the like.

Specifically, that the terminal device is in the wake-up time period indicated by the first wake-up signal includes at least one of the following:

The terminal device is in a state of monitoring the PDCCH, the terminal device is not in the monitoring period of the first wake-up signal, the terminal device is in the running time period of the first timer, or the like.

With reference to the first aspect, in some implementations of the first aspect, the first information sent in the monitoring period of the first wake-up signal includes at least one of the following:
the p-CSI including the L1-RSRP on the PUCCH; and
the p-CSI not including the L1-RSRP on the PUCCH.

With reference to the first aspect, in some implementations of the first aspect, the first information sent in the wake-up time period indicated by the first wake-up signal includes at least one of the following:
the p-SRS, the sp-SRS, the sp-CSI on the PUCCH, the sp-CSI on the PUSCH, the p-CSI including the L1-RSRP on the PUCCH, and the p-CSI not including the L1-RSRP on the PUCCH.

According to a second aspect, a communication method is provided. The method is applied to a terminal device side. For example, the method may be performed by a terminal device, or may be performed by a module (for example, a chip or a circuit) in the terminal device, or may be performed by a logical node, a logical module, or software that can implement all or some functions of the terminal device. This is not limited in this application.

The method includes: The terminal device determines, based on second information, whether a current time domain position is in a DRX active time period.

The second information includes at least one of the following:
a first wake-up signal detected by the terminal device until a time period of a first time length prior to the current time domain position, where the first wake-up signal is used for waking up the terminal device;
an uplink grant (grant), a downlink assignment (assignment), a DRX command medium access control (medium access control, MAC) control element (control element, CE) (DRX Command MAC CE), or a long DRX command MAC CE (Long DRX Command MAC CE) received by the terminal device from a network device until a time period of a second time length prior to the current time domain position; and
scheduling request (scheduling request, SR) signaling sent by the terminal device to the network device until a time period of a third time length prior to the current time domain position.

The first time length is greater than or equal to a fourth time length. If the terminal device detects the first wake-up signal, the terminal device needs to switch from the second module to the first module to send the first information. In this case, time for the terminal device to switch from the second module to the first module is the fourth time length.

The first time length, the second time length, and the third time length may be the same or different. This is not limited in this application. For example, each of the first time length, the second time length, and the third time length may be 4 ms.

For example, the first information includes at least one of the following:
a p-SRS, an sp-SRS, sp-CSI on a PUCCH, sp-CSI on a PUSCH, p-CSI on the PUCCH, and the like. The p-CSI on the PUCCH includes at least one of the following:
p-CSI including L1-RSRP on the PUCCH and p-CSI not including the L1-RSRP on the PUCCH.

According to the foregoing method, when determining whether the current time domain position is in the DRX active time period, the terminal device considers monitoring of the first wake-up signal, so that a result of determining, by the terminal device, whether the current location is in the DRX active time period is more accurate.

With reference to the second aspect, in some implementations of the second aspect, the method further includes: The terminal device sends first information to the network device in a second time period, where the second time period includes a DRX inactive time period and/or a DRX active time period.

According to the foregoing method, when operating in a DRX mechanism, the terminal device can send a reference signal for uplink channel estimation to the network device and/or report measured downlink channel information to the network device, so that low power consumption of the terminal device can be ensured, and the network device can obtain the channel information, thereby ensuring communication performance.

With reference to the second aspect, in some implementations of the second aspect, that the terminal device sends the first information to the network device in the second time period includes: The terminal device skips sending the first information in the DRX inactive time period, and the terminal device sends the first information in the DRX active time period.

According to the foregoing method, the terminal device may not send the first information to the network device in the DRX inactive time period. In other words, when the terminal device is not in the DRX active time period, the terminal device does not need to be specifically woken up to send the first information, so that power consumption of the terminal device can be kept relatively low.

With reference to the second aspect, in some implementations of the second aspect, that the terminal device skips sending the first information in the DRX inactive time period includes: The terminal device skips sending the first information in the DRX inactive time period and in a DRX on duration time period.

Specifically, that the terminal device is in the DRX inactive time period and in the DRX on duration time period may be understood as that a current time domain position of the terminal device is in the DRX inactive time period and also in the DRX on duration time period.

According to the foregoing method, the terminal device may not start an on duration timer in the DRX on duration time period, so that power consumption of the terminal device can be further reduced.

With reference to the second aspect, in some implementations of the second aspect, that the terminal device sends the first information to the network device in the second time period includes: The terminal device sends the first information at a third periodicity in the DRX inactive time period, and the terminal device sends the first information at a fourth periodicity in the DRX active time period, where the third periodicity is greater than the fourth periodicity.

The fourth periodicity is a configured periodicity for the first information in time domain.

For example, the third periodicity may be a multiple of the fourth periodicity. In this case, the third periodicity may also be referred to as a relaxed periodicity of the fourth periodicity, that is, the third periodicity is equal to the fourth periodicity multiplied by a relaxation factor. The relaxation factor may be preconfigured by a network for the terminal device, or may be specified in a protocol. This is not limited in this application.

For another example, the third periodicity may be a DRX cycle.

In comparison with that the terminal device sends the first information at the configured periodicity in the monitoring period of the first wake-up signal, in the foregoing method, when the terminal device is not in the DRX active time period, the terminal device may send the first information at a DRX cycle greater than the configured periodicity, so that communication performance can be ensured, and power consumption of the terminal device can also be reduced to some extent.

With reference to the second aspect, in some implementations of the second aspect, the method further includes: The terminal device receives fourth indication information from the network device, where the fourth indication information indicates whether the terminal device sends the first information in the DRX inactive time period, the fourth indication information indicates whether the terminal device sends the first information in the DRX inactive time period and in the DRX on duration time period, or the fourth indication information indicates that the terminal device sends the first information at the third periodicity in the DRX inactive time period.

Alternatively, the fourth indication information indicates whether the terminal device sends the first information in the DRX inactive time period, or the fourth indication information indicates whether the terminal device sends the first information at the first periodicity in the DRX inactive time period.

With reference to the second aspect, in some implementations of the second aspect, if the fourth indication information indicates that the terminal device sends the first information in the DRX inactive time period, the fourth indication information further indicates that the terminal device sends, in the DRX inactive time period, first-type information included in the first information; or if the fourth indication information indicates that the terminal device sends the first information in the DRX inactive time period and in the DRX on duration time period, the fourth indication information further indicates that the terminal device sends, in the DRX inactive time period and in the DRX on duration time period, first-type information included in the first information.

With reference to the second aspect, in some implementations of the second aspect, if the fourth indication information indicates that the terminal device sends the first information in the DRX inactive time period, the method further includes: The terminal device skips sending, in the DRX inactive time period, second-type information included in the first information; or if the first indication information indicates that the terminal device sends the first information in the DRX inactive time period and in the DRX on duration time period, the method further includes: The terminal device skips sending, in the DRX inactive time period and in the DRX on duration time period, second-type information included in the first information.

According to the foregoing method, the terminal device may send, in the DRX inactive time period, only a part of the multiple pieces of information included in the first information, or the terminal device sends, in the DRX inactive time period and in the DRX on duration time period, only a part of the multiple pieces of information included in the first information, so that power consumption of the terminal device can be reduced.

With reference to the second aspect, in some implementations of the second aspect, the first-type information includes the p-CSI including L1-RSRP on the PUCCH and/or the p-CSI not including the L1-RSRP on the PUCCH. The second-type information includes one or more of the following:
the p-SRS, the sp-SRS, the sp-CSI on the PUCCH, and the sp-CSI on the PUSCH.

With reference to the second aspect, in some implementations of the second aspect, that the terminal device skips sending the first information in the DRX inactive time period includes: The terminal device skips sending the first information in the DRX inactive time period and not in the DRX on duration time period. Specifically, that the terminal device is in the DRX inactive time period and not in the DRX on duration time period may be understood as that the current time domain position of the terminal device is in the DRX inactive time period and not in the DRX on duration time period.

According to the foregoing method, power consumption of the terminal device can be reduced.

With reference to the second aspect, in some implementations of the second aspect, the DRX active time period is a running time period of a first timer, and the first timer is started by the terminal device in response to detecting the first wake-up signal.

For example, the running time period of the first timer may be indicated by the first wake-up signal detected by the terminal device, or the running time period of the first timer may be preconfigured at the terminal device. This is not limited in this application.

For another example, the first timer is an on duration timer (drx-onDurationTimer), an inactivity timer (drx-InactivityTimer), or a retransmission timer (drx-RetransmissionTimer) in a DRX mechanism.

According to the foregoing method, after detecting the wake-up signal, the terminal device may control sending of the first information by using a plurality of timers in the DRX mechanism, and does not need to reconfigure a new timer for the terminal device, thereby reducing resource occupation.

With reference to the second aspect, in some implementations of the second aspect, the method further includes: The terminal device detects a first wake-up signal, where the first wake-up signal carries fifth indication information, and the fifth indication information indicates that the terminal device sends first information.

With reference to the second aspect, in some implementations of the second aspect, the method further includes: The terminal device receives sixth indication information from the network device, where the sixth indication information indicates that the terminal device stops sending the first information.

That the fifth indication information indicates that the terminal device stops sending the first information may be replaced as follows: The fifth indication information indicates that the terminal device does not send the first information.

Specifically, the fifth indication information may further indicate time at which the terminal device sends the first information, and the sixth indication information may further indicate time at which the terminal device stops sending the first information.

According to the foregoing method, the terminal device may send the first information based on the indication of the network device and stop sending the first information based on the indication of the network device, so that the sending of the first information can be more flexibly controlled.

Specifically, that the terminal device is in the DRX inactive time period includes at least one of the following:

The terminal device is in a state of monitoring the first wake-up signal, the terminal device is not in the DRX active time period, the terminal device is not in a running time period of a first timer, the terminal device operates by using the second module, the terminal device operates by using a wake-up circuit, the terminal device monitors the first wake-up signal, the terminal device is in a monitoring time period of the first wake-up signal, or the like.

Specifically, that the terminal device is in the DRX active time period includes at least one of the following:

The terminal device is in a state of monitoring a PDCCH, the terminal device is not in the DRX active time period, the terminal device is in the running time period of the first timer, or the like.

With reference to the second aspect, in some implementations of the second aspect, the first information sent in the DRX inactive time period includes at least one of the following:
the p-CSI including the L1-RSRP on the PUCCH; and
the p-CSI not including the L1-RSRP on the PUCCH.

With reference to the second aspect, in some implementations of the second aspect, the first information sent in the DRX active time period includes at least one of the following:
the p-SRS, the sp-SRS, the sp-CSI on the PUCCH, the sp-CSI on the PUSCH, the p-CSI including the L1-RSRP on the PUCCH, and the p-CSI not including the L1-RSRP on the PUCCH.

With reference to the second aspect, in some implementations of the second aspect, the first information sent in the DRX inactive time period includes at least one of the following:
the p-CSI including the L1-RSRP on the PUCCH; and
the p-CSI not including the L1-RSRP on the PUCCH.

With reference to the second aspect, in some implementations of the second aspect, the first information sent in the DRX active time period includes at least one of the following:
the p-SRS, the sp-SRS, the sp-CSI on the PUCCH, the sp-CSI on the PUSCH, the p-CSI including the L1-RSRP on the PUCCH, and the p-CSI not including the L1-RSRP on the PUCCH.

According to a third aspect, a communication method is provided. The method is applied to a terminal device side. For example, the method may be performed by a terminal device, or may be performed by a module (for example, a chip or a circuit) in the terminal device, or may be performed by a logical node, a logical module, or software that can implement all or some functions of the terminal device. This is not limited in this application.

The method includes: The terminal device determines, based on third information, whether all monitoring occasions of a second wake-up signal are in the DRX active time period, where the second wake-up signal indicates whether the terminal device starts at least one on duration timer; and if the terminal device determines that the monitoring occasions of the second wake-up signal are in the DRX active time period, the terminal device starts the at least one on duration timer.

The third information includes at least one of the following:
a first wake-up signal detected by the terminal device until a time period of a fifth time length prior to a last monitoring occasion of the second wake-up signal, where the first wake-up signal is used for waking up the terminal device;
a grant, an assignment, a DRX Command MAC CE, or a Long DRX Command MAC CE received by the terminal device from the network device until a time period of a sixth time length prior to the last monitoring occasion of the second wake-up signal; and
SR signaling sent by the terminal device to the network device until a time period of a seventh time length prior to the last monitoring occasion of the second wake-up signal.

The fifth time length is greater than or equal to a fourth time length. If the terminal device detects the first wake-up signal, the terminal device needs to switch from the second module to the first module to send the first information. In this case, time for the terminal device to switch from the second module to the first module is the fourth time length.

The fifth time length, the sixth time length, and the seventh time length may be the same or different. This is not limited in this application. For example, each of the fifth time length, the sixth time length, and the seventh time length may be 4 ms.

For example, the second wake-up signal may be a PDCCH wake-up signal (PDCCH wake-up signal, PDCCH-WUS), downlink control information (downlink control information, DCI), DCI with cyclic redundancy code scrambled by power saving radio network temporary identifier (DCI with cyclic redundancy code scrambled by power saving radio network temporary identifier, DCP), or the like.

In addition, if the terminal device determines that all the monitoring occasions of the second wake-up signal are not in the DRX active time period, the terminal device monitors the second wake-up signal, and the detected second wake-up signal indicates whether to start the at least one on duration timer.

The terminal device may send the first information on the at least one started on duration timer.

For example, the first information includes at least one of the following:
a p-SRS, an sp-SRS, sp-CSI on a PUCCH, sp-CSI on a PUSCH, p-CSI on the PUCCH, and the like. The p-CSI on the PUCCH includes at least one of the following:
p-CSI including L1-RSRP on the PUCCH and p-CSI not including the L1-RSRP on the PUCCH.

According to the foregoing method, when determining whether all the monitoring occasions of the second wake-up signal are in the DRX active time period, the terminal device considers whether the last monitoring occasion of the second wake-up signal is in the DRX active time period, so that a method for determining whether all the monitoring occasions of the second wake-up signal are in the DRX active time period is specified.

According to a fourth aspect, a communication method is provided. The method is applied to a terminal device side. For example, the method may be performed by a terminal device, or may be performed by a module (for example, a chip or a circuit) in the terminal device, or may be performed by a logical node, a logical module, or software that can implement all or some functions of the terminal device. This is not limited in this application.

The method includes: The terminal device detects a first wake-up signal, where the first wake-up signal carries second indication information, and the second indication information indicates that the terminal device sends first information in a wake-up time period indicated by the first wake-up signal; and the terminal device sends the first information to a network device in the wake-up time period indicated by the first wake-up signal based on the second indication information.

For example, the first information includes at least one of the following:
a p-SRS, an sp-SRS, sp-CSI on a PUCCH, sp-CSI on a PUSCH, p-CSI on the PUCCH, and the like. The p-CSI on the PUCCH includes at least one of the following:
p-CSI including L1-RSRP on the PUCCH and p-CSI not including the L1-RSRP on the PUCCH.

With reference to the fourth aspect, in some implementations of the fourth aspect, the method further includes: The terminal device receives third indication information from the network device, where the third indication information indicates that the terminal device stops sending the first information.

That the third indication information indicates that the terminal device stops sending the first information may be replaced as follows: The third indication information indicates that the terminal device does not send the first information.

Specifically, the second indication information may further indicate time at which the terminal device sends the first information, that is, the second indication information may further indicate time at which the terminal device sends the first information in the wake-up time period indicated by the first wake-up signal; and the third indication information may further indicate time at which the terminal device stops sending the first information, that is, the third indication information may further indicate time at which the terminal device stops sending the first information in the wake-up time period indicated by the first wake-up signal.

According to the foregoing method, the terminal device may send the first information based on the indication of the network device and stop sending the first information based on the indication of the network device, so that the sending of the first information can be more flexibly controlled.

According to a fifth aspect, a communication method is provided. The method is applied to a network device side. The method may be performed by a network device, or may be performed by a module (for example, a chip or a circuit) in the network device, or may be performed by a logical node, a logical module, or software that can implement all or some functions of the network device. This is not limited in this application.

The method includes: The network device receives first information from a terminal device in a first time period, where the first time period includes a monitoring period of a first wake-up signal and/or a wake-up time period indicated by the first wake-up signal, and the first wake-up signal is used for waking up the terminal device; and the network device obtains channel information based on the first information.

For example, the first information includes at least one of the following:
a p-SRS, an sp-SRS, sp-CSI on a PUCCH, sp-CSI on a PUSCH, p-CSI on the PUCCH, and the like. The p-CSI on the PUCCH includes at least one of the following:
p-CSI including L1-RSRP on the PUCCH and p-CSI not including the L1-RSRP on the PUCCH.

According to the foregoing method, when the terminal device operates in a wake-up mechanism, the network device may receive, from the terminal device, a reference signal for uplink channel estimation and/or receive downlink channel information reported by the terminal device, so that the network device can obtain the channel information, thereby ensuring communication performance.

With reference to the fifth aspect, in some implementations of the fifth aspect, that the network device receives the first information from the terminal device in the first time period includes: The network device sends the first wake-up signal to the terminal device in the monitoring period of the first wake-up signal, where the monitoring period of the first wake-up signal is a time period in which the terminal device does not send the first information; and the network device receives the first information in the wake-up time period indicated by the first wake-up signal.

According to the foregoing method, the network device may receive the first information in the wake-up time period indicated by the first wake-up signal, so that the network device can obtain the channel information, thereby ensuring communication performance.

With reference to the fifth aspect, in some implementations of the fifth aspect, that the network device receives the first information from the terminal device in the first time period includes: The network device receives the first information at a first periodicity in the monitoring period of the first wake-up signal, and the network device receives the first information at a second periodicity in the wake-up time period indicated by the first wake-up signal, where the first periodicity is greater than the second periodicity.

The second periodicity is a configured periodicity for the first information in time domain.

For example, the first periodicity may be a multiple of the second periodicity. In this case, the first periodicity may also be referred to as a relaxed periodicity of the second periodicity, that is, the first periodicity is equal to the second periodicity multiplied by a relaxation factor. The relaxation factor may be preconfigured by a network for the terminal device, or may be specified in a protocol. This is not limited in this application.

In comparison with that the network device receives, at the configured periodicity in the monitoring period of the first wake-up signal, the first information sent by terminal device, in the foregoing method, the terminal device may send the first information at the first periodicity greater than the configured periodicity, so that communication performance can be ensured, and power consumption of the terminal device can also be reduced to some extent.

With reference to the fifth aspect, in some implementations of the fifth aspect, when the terminal device operates in a DRX mechanism, the first periodicity may be a DRX cycle.

When the terminal device operates in the DRX mechanism, the monitoring period of the first wake-up signal may also be a DRX inactive time period, and the wake-up time period indicated by the first wake-up signal may also be a DRX active time period.

In comparison with that the network device receives, at the configured periodicity in the monitoring period of the first wake-up signal, the first information sent by terminal device, in the foregoing method, the terminal device may send the first information at the DRX cycle greater than the configured periodicity, so that communication performance can be ensured, and power consumption of the terminal device can also be reduced to some extent.

With reference to the fifth aspect, in some implementations of the fifth aspect, the method further includes: The network device sends first indication information to the terminal device, where the first indication information indicates that the terminal device does not send the first information in the monitoring period of the first wake-up signal, or the first indication information indicates that the terminal device sends the first information at the first periodicity in the monitoring period of the first wake-up signal.

Alternatively, the first indication information indicates whether the terminal device sends the first information in the monitoring period of the first wake-up signal, or the first indication information indicates whether the terminal device sends the first information at the first periodicity in the monitoring period of the first wake-up signal.

With reference to the fifth aspect, in some implementations of the fifth aspect, the wake-up time period indicated by the first wake-up signal is a running time period of a first timer, and the first timer is started by the terminal device in response to detecting the first wake-up signal.

For example, the running time period of the first timer may be indicated by the first wake-up signal detected by the terminal device, or the running time period of the first timer may be preconfigured at the terminal device. This is not limited in this application.

According to the foregoing method, after the network device sends the wake-up signal to the terminal device, the terminal device may control sending of the first information by running a timer, and the network device does not need to dynamically indicate the sending and stopping the sending of the first information, so that signaling overheads can be reduced.

With reference to the fifth aspect, in some implementations of the fifth aspect, the first timer is an on duration timer (drx-onDurationTimer), an inactivity timer (drx-InactivityTimer), or a retransmission timer (drx-RetransmissionTimer) in the DRX mechanism.

According to the foregoing method, after the network device sends the wake-up signal to the terminal device, the terminal device can control sending of the first information by running a plurality of timers in the DRX mechanism, and does not need to reconfigure a new timer for the terminal device, thereby reducing resource occupation.

With reference to the fifth aspect, in some implementations of the fifth aspect, the method further includes: The network device sends the first wake-up signal to the terminal device, where the first wake-up signal carries second indication information, and the second indication information indicates that the terminal device sends the first information.

With reference to the fifth aspect, in some implementations of the fifth aspect, the method further includes: The network device sends third indication information to the terminal device, where the third indication information indicates that the terminal device stops sending the first information.

That the third indication information indicates that the terminal device stops sending the first information may be replaced as follows: The third indication information indicates that the terminal device does not send the first information.

Specifically, the second indication information may further indicate time at which the terminal device sends the first information, and the third indication information may further indicate time at which the terminal device stops sending the first information.

According to the foregoing method, the network device may use the indication information to indicate that the terminal device sends the first information and that the terminal device stops sending the first information, so that the sending of the first information can be more flexibly controlled.

Specifically, the monitoring period of the first wake-up signal may be used by the terminal device when one or more of the following conditions are satisfied:

Monitoring of the first wake-up signal is enabled, monitoring of the first wake-up signal is configured, monitoring of the first wake-up signal is used, monitoring of the first wake-up signal is activated, or the like.

With reference to the fifth aspect, in some implementations of the fifth aspect, the first information sent in the monitoring period of the first wake-up signal includes at least one of the following:
the p-CSI including the L1-RSRP on the PUCCH; and
the p-CSI not including the L1-RSRP on the PUCCH.

With reference to the fifth aspect, in some implementations of the fifth aspect, the first information sent in the wake-up time period indicated by the first wake-up signal includes at least one of the following:
the p-SRS, the sp-SRS, the sp-CSI on the PUCCH, the sp-CSI on the PUSCH, the p-CSI including the L1-RSRP on the PUCCH, and the p-CSI not including the L1-RSRP on the PUCCH.

According to a sixth aspect, a communication method is provided. The method is applied to a network device side. The method may be performed by a network device, or may be performed by a module (for example, a chip or a circuit) in the network device, or may be performed by a logical node, a logical module, or software that can implement all or some functions of the network device. This is not limited in this application.

The method includes: The network device sends a first wake-up signal to a terminal device, where the first wake-up signal carries second indication information, and the second indication information indicates that the terminal device sends first information in a wake-up time period indicated by the first wake-up signal; the network device receives the first information from the terminal device in the wake-up time period indicated by the first wake-up signal; and the network device obtains channel information based on the first information.

For example, the first information includes at least one of the following:
a p-SRS, an sp-SRS, sp-CSI on a PUCCH, sp-CSI on a PUSCH, p-CSI on the PUCCH, and the like. The p-CSI on the PUCCH includes at least one of the following:
p-CSI including L1-RSRP on the PUCCH and p-CSI not including the L1-RSRP on the PUCCH.

With reference to the sixth aspect, in some implementations of the sixth aspect, the method further includes: The network device sends third indication information to the terminal device, where the third indication information indicates the terminal device to stop sending the first information.

That the third indication information indicates that the terminal device stops sending the first information may be replaced as follows: The third indication information indicates that the terminal device does not send the first information.

Specifically, the second indication information may further indicate time at which the terminal device sends the first information, that is, the second indication information may further indicate time at which the terminal device sends the first information in the wake-up time period indicated by the first wake-up signal; and the third indication information may further indicate time at which the terminal device stops sending the first information, that is, the third indication information may further indicate time at which the terminal device stops sending the first information in the wake-up time period indicated by the first wake-up signal.

According to the foregoing method, the network device may use the indication information to indicate that the terminal device sends the first information and that the terminal device stops sending the first information, so that the sending of the first information can be more flexibly controlled.

Communication apparatuses in the following seventh aspect to the ninth aspect may be terminal devices or network devices, or may be modules (for example, chips or circuits) in the terminal devices or the network devices, or may be logical nodes, logical modules, or software that can implement all or some of functions of the terminal devices or the network devices. This is not limited in this application.

According to a seventh aspect, a communication apparatus is provided. The communication apparatus includes a module, for example, a processing module and a transceiver module, configured to perform the method according to any one of the first aspect and the possible implementations of the first aspect, the method according to any one of the second aspect and the possible implementations of the second aspect, the method according to any one of the third aspect and the possible implementations of the third aspect, the method according to any one of the fourth aspect and the possible implementations of the fourth aspect, the method according to any one of the fifth aspect and the possible implementations of the fifth aspect, or the method according to any one of the sixth aspect or the possible implementations of the sixth aspect. The processing module may be a processor, and the transceiver module may be a transceiver. When the communication apparatus is a terminal device or a network device, the transceiver may be a radio frequency module. When the communication apparatus is a module (for example, a chip or a circuit) in a terminal device or a network device, the transceiver may be an input/output interface, a pin, a circuit, or the like.

According to an eighth aspect, a communication apparatus is provided, including a processor. The processor is configured to cause, by executing a computer program or instructions or by using a logic circuit, the communication apparatus to perform the method according to any one of the first aspect and the possible implementations of the first aspect, the method according to any one of the second aspect and the possible implementations of the second aspect, the method according to any one of the third aspect and the possible implementations of the third aspect, the method according to any one of the fourth aspect and the possible implementations of the fourth aspect, the method according to any one of the fifth aspect and the possible implementations of the fifth aspect, or the method according to any one of the sixth aspect and the possible implementations of the sixth aspect.

In a possible implementation, the communication apparatus further includes a memory, configured to store the computer program or the instructions.

In a possible implementation, the communication apparatus further includes a communication interface, configured to input and/or output a signal.

According to a ninth aspect, a communication apparatus is provided, including a logic circuit and an input/output interface. The input/output interface is configured to input and/or output a signal. The logic circuit is configured to perform the method according to any one of the first aspect and the possible implementations of the first aspect, the method according to any one of the second aspect and the possible implementations of the second aspect, the method according to any one of the third aspect and the possible implementations of the third aspect, the method according to any one of the fourth aspect and the possible implementations of the fourth aspect, the method according to any one of the fifth aspect and the possible implementations of the fifth aspect, or the method according to any one of the sixth aspect and the possible implementations of the sixth aspect.

According to a tenth aspect, a computer-readable storage medium is provided. The computer-readable storage medium stores a computer program or instructions. When the computer program or the instructions are run on a computer, the method according to any one of the first aspect and the possible implementations of the first aspect, the method according to any one of the second aspect and the possible implementations of the second aspect, the method according to any one of the third aspect and the possible implementations of the third aspect, the method according to any one of the fourth aspect and the possible implementations of the fourth aspect, the method according to any one of the fifth aspect and the possible implementations of the fifth aspect, or the method according to any one of the sixth aspect and the possible implementations of the sixth aspect is performed.

According to an eleventh aspect, a computer program product is provided, including instructions. When the instructions are run on a computer, the method according to any one of the first aspect and the possible implementations of the first aspect, the method according to any one of the second aspect and the possible implementations of the second aspect, the method according to any one of the third aspect and the possible implementations of the third aspect, the method according to any one of the fourth aspect and the possible implementations of the fourth aspect, the method according to any one of the fifth aspect and the possible implementations of the fifth aspect, or the method according to any one of the sixth aspect and the possible implementations of the sixth aspect is performed.

According to a twelfth aspect, a communication system is provided. The communication system includes a terminal device and a network device. The terminal device is configured to perform the method according to any one of the first aspect and the possible implementations of the first aspect, the method according to any one of the second aspect and the possible implementations of the second aspect, the method according to any one of the third aspect and the possible implementations of the third aspect, or the method according to any one of the fourth aspect and the possible implementations of the fourth aspect; and the network device is configured to perform the method according to any one of the fifth aspect and the possible implementations of the fifth aspect, or the method according to any one of the sixth aspect and the possible implementations of the sixth aspect.

For related descriptions and beneficial effects of the seventh aspect to the twelfth aspect, refer to the descriptions of the first aspect to the sixth aspect.

### BRIEF DESCRIPTION OF DRAWINGS

FIG. 1 is a diagram of a communication system 100 to which technical solutions of this application may be applied;
FIG. 2 is a diagram of triggering a terminal device to operate by using a first module and a second module;
FIG. 3 is a diagram of an example of an interaction procedure of a communication method 300 according to an embodiment of this application;
FIG. 4a and FIG. 4b are diagrams of an example of a monitoring period of a first wake-up signal and a wake-up time period indicated by the first wake-up signal according to an embodiment of this application;
FIG. 5a and FIG. 5b are diagrams of an example in which a terminal device sends first information according to an embodiment of this application;
FIG. 6a and FIG. 6b are diagrams of another example in which a terminal device sends first information according to an embodiment of this application;
FIG. 7 is a diagram of a DRX mechanism;
FIG. 8a and FIG. 8b are diagrams of data retransmission in a DRX mechanism;
FIG. 9 is a diagram of an example of an interaction procedure of a communication method 500 in a DRX mechanism according to an embodiment of this application;
FIG. 10a and FIG. 10b are diagrams of an example in which a terminal device sends first information in a DRX mechanism according to an embodiment of this application;
FIG. 11a and FIG. 11b are diagrams of another example in which a terminal device sends first information in a DRX mechanism according to an embodiment of this application;
FIG. 12 is a block diagram of an example of a communication apparatus 1200 applicable to an embodiment of this application;
FIG. 13 is a block diagram of an example of a communication apparatus 1300 applicable to an embodiment of this application; and
FIG. 14 is a block diagram of an example of a communication apparatus 1400 applicable to an embodiment of this application.

### DESCRIPTION OF EMBODIMENTS

The following describes technical solutions of embodiments in this application with reference to accompanying drawings.

For ease of understanding embodiments of this application, the following descriptions are provided before embodiments of this application are described.

In this application, "indicate" may include "directly indicate" and "indirectly indicate". In other words, "indicate" may be "explicitly indicate" and/or "implicitly indicate". For example, a piece of information indicates information I, the information may directly indicate I or indirectly indicate I, but does not necessarily means that the information carries I.

In the following embodiments, first, second, third, fourth, and various numbers are merely intended for differentiation for ease of description, but not to limit the scope of embodiments of this application. For example, different messages are differentiated.

In embodiments of this application, the terms such as "example", "for example", "in an example", and "as an (another) example" are used for representing giving an example, an illustration, or a description. Any embodiment or design scheme described as an "example" in this application should not be explained as being more preferred or having more advantages than another embodiment or design scheme. Exactly, the term "example" is used for presenting a concept in a specific manner.

The terms "include", "comprise", "have", and their variants all mean "including but not limited to", unless otherwise specifically emphasized in another manner.

In this application, unless otherwise specified, "/" indicates an "or" relationship between associated objects. For example, A/B may indicate A or B. In addition, the expression "and/or" indicates an "and" association relationship or an "or" association relationship between associated objects. For example, A and/or B may indicate the following cases: Only A exists, only B exists, and both A and B exist, where A and B may be singular or plural. In addition, "at least one of the following" or a similar expression thereof represents any combination of the listed items. For example, at least one of A, B, and (or) C may represent the following cases: Only A exists, only B exists, only C exists, both A and B exist, both B and C exist, both A and C exist, and A, B, and C all exist, where A, B, and C may be singular or plural.

In embodiments of this application, related descriptions of sending a message, information, or data by A to B and receiving the message, the information, or the data by B from A are intended to describe an object to which the message, the information, or the data is to be sent. Whether the message, the information, or the data is directly or indirectly sent via another node is not limited.

First, a communication system to which an embodiment of this application is applicable is described.

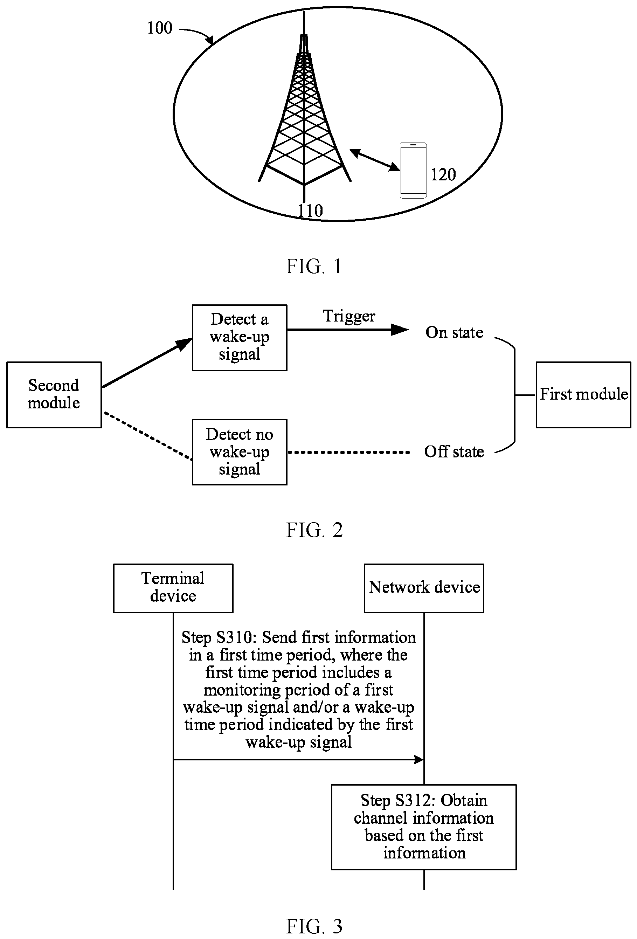

FIG. 1 is a diagram of a communication system 100 to which an embodiment of this application is applicable. As shown in FIG. 1, the communication system 100 includes a network device 110 and a terminal device 120.

The terminal device 120 is a device having a wireless transceiver function, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device 120 may alternatively be a satellite phone, a cellular phone, a smartphone, a wireless data card, a wireless modem, a machine-type communication device, a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a compute device, another processing device connected to a wireless modem, a vehicle-mounted device, a communication device carried on a high-altitude aircraft, a wearable device, an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in this application.

A communication apparatus configured to implement a function of the terminal device 120 may be a terminal device, or may be an apparatus that supports the terminal device in implementing the function, for example, a chip system. The apparatus may be installed in the terminal device or used in cooperation with the terminal device. In this application, the chip system may include a chip, or may include a chip and another discrete component.

The network device 110 is a device having a wireless transceiver function, and is configured to communicate with the terminal device 120. The network device 110 may be a node in a radio access network (radio access network, RAN), and may be referred to as a base station, or may be referred to as a RAN node. The network device 110 may be an evolved NodeB (evolved NodeB, eNB, or eNodeB) of long term evolution (long term evolution, LTE), a base station in a 5G network like a gNodeB (gNB), a base station in a public land mobile network (public land mobile network, PLMN) evolved after 5G, a broadband network gateway (broadband network gateway, BNG), an aggregation switch, a 3rd generation partnership project (3rd generation partnership project, 3GPP) access device, or the like.

The RAN may be configured as a RAN defined in a 3GPP protocol, an open radio access network (open radio access network, O-RAN), a cloud access network (cloud radio access network, C-RAN), or the like. The network device 110 may further include various forms of base stations, for example, a macro base station, a micro base station (also referred to as a small station), a relay station, a transmission and reception point (transmission and reception point, TRP), a transmission point (transmission point, TP), a mobile switching center, a device that bears a base station function in device-to-device (device-to-device, D2D) communication, vehicle-to-everything (vehicle-to-everything, V2X) communication, and machine-to-machine (machine-to-machine, M2M) communication, a network device in a non-terrestrial network (non-terrestrial network, NTN), and the like. This is not specifically limited.

Alternatively, the network device 110 may be a network element or a module that implements some functions of the base station, for example, one or more of the following: a central unit (central unit, CU), a distributed unit (distributed unit, DU), or a radio unit (radio unit, RU). Functions of the CU and the DU may be implemented by different network elements, or may be both implemented by a baseband unit (baseband unit, BBU) of the base station. Optionally, the CU may be further divided into a CU-control plane (control plane, CP) and a CU-user plane (user plane, UP). A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) protocol, an enhanced common public radio interface (enhanced common public radio interface, eCPRI) protocol, a fronthaul interface protocol between a DU and an RU in an O-RAN system, or the like. This is not limited.

A communication apparatus configured to implement a function of the network device 110 may be a network device, or may be an apparatus that supports the network device in implementing the function, for example, a chip system. The apparatus may be installed in the network device or used in cooperation with the network device. In embodiments of this application, the chip system may include a chip, or may include a chip and another discrete device.

It should be noted that the communication system 100 may include any quantity of network devices 110 and/or any quantity of terminal devices 120. This is not limited in this application.

In embodiments of this application, the communication system 100 may be, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) communication system, a 6th generation (6th generation, 6G) communication system, a high-altitude platform station (high-altitude platform station, HAPS) communication system, a non-terrestrial network (non-terrestrial network, NTN) communication system, or the like. Alternatively, the communication system 100 may be a terrestrial cellular communication system, a D2D communication system, a V2X communication system, an M2M communication system, a machine-type communication (machine-type communication, MTC) system, an internet of things (internet of things, IoT) communication system, an internet of vehicles communication system, or another communication system.

Alternatively, the communication system 100 may be a single-hop (single-hop) relay system, a multi-hop (multi-hop) relay system, an integrated access and backhaul (integrated access and backhaul, IAB) system, a reconfigurable intelligent surface (reconfigurable intelligent surface, RIS) communication system, or the like. This is not limited.

Then, technical content in embodiments of this application is briefly described.

Regardless of whether the terminal device 120 performs a paging receiving procedure when the terminal device 120 is in an idle (idle) state/an inactive (inactive) state, or receives data when the terminal device 120 is in a connected state, the terminal device 120 uses a same receiving module (or receiver or receiver circuit). In this application, a circuit that completes these functions (or performs related steps) may be referred to as a first module. The first module is merely named for differentiation, and a specific name of the first module does not limit the protection scope of this application. For example, the first module may alternatively be a first circuit or a main circuit.

A process in which the terminal device 120 receives a signal by using the first module may be referred to as a process in which a signal is transmitted on a link (which may be denoted as a first link for differentiation). The first link represents a connection relationship between the terminal device 120 and the network device 110, and is a logical concept rather than a physical entity. The first link may also be referred to as a main link.

Power consumption of performing, by the terminal device 120, the paging receiving procedure by using the first module is high. For example, the terminal device 120 first uses the first module to receive a downlink signal, then performs blind detection on a physical downlink control channel (physical downlink control channel, PDCCH), and finally performs decoding and the like on a received physical downlink shared channel (physical downlink shared channel, PDSCH), resulting in high power consumption. In addition, because a circuit structure of the first module is complex, reference power consumption of the first module during operation is also high.

To reduce high power consumption caused when the terminal device 120 performs the paging receiving procedure by using the first module, the terminal device 120 may use a separate low-power small circuit to receive a wake-up signal (wake-up signal/radio, WUS/WUR) or a low-power wake-up signal (low-power wake-up signal, LP-WUS). The wake-up signal may be used for waking up at least one terminal device or at least one group of terminal devices. To reduce power consumption of the low-power small circuit, the wake-up signal is usually modulated by using simple modulation schemes such as on-off keying (on-off keying, OOK). Correspondingly, the low-power small circuit in the terminal device receives the wake-up signal in an envelope detection manner. The low-power small circuit may be implemented by using a separate small circuit with a simple structure or a chip, so that power consumption of the low-power small circuit is low.

In a possible implementation, the low-power small circuit may alternatively be a low-power circuit (low-power radio, LR), a wake-up receiver (wake-up receiver, WUR), a wake-up radio (wake-up radio, WUR), or the like. A specific name of the low-power small circuit is not limited in this application. In this application, the low-power small circuit may be referred to as a second module. It may be understood that the second module is merely named for differentiation, and a specific name of the second module does not limit the protection scope of this application. For example, the second module may alternatively be a second circuit or a wake-up circuit.

Similarly, a process in which the terminal device 120 receives a signal by using the second module may be referred to as a process in which a signal is transmitted on a link (which is denoted as a second link for differentiation). The second link represents a connection relationship between the terminal device 120 and the network device 110, and is a logical concept rather than a physical entity. The wake-up signal is merely an example name, and a name thereof is not limited in this application.

FIG. 2 is a diagram of an example in which a terminal device 120 receives a wake-up signal by using a second module. As shown in FIG. 2, the terminal device 120 receives a signal by using the second module. If the terminal device 120 cannot detect a wake-up signal associated with the terminal device 120, the terminal device 120 continues to receive a signal by using the second module, and a first module may be in an off state (or a sleep mode); if the terminal device 120 detects a wake-up signal associated with the terminal device 120, the terminal device 120 triggers wake-up of a first module, that is, enables the first module to be in/switched to an on state (or referred to as an operating state, or referred to as an active state). After the first module is turned on, the terminal device 120 performs a PDCCH monitoring procedure. The monitored PDCCH may be a PDCCH used for scheduling data transmission, for example, a PDCCH carrying any one of the following downlink control information (downlink control information, DCI), such as a DCI format 0_0, a DCI format 0_1, a DCI format 0_2, a DCI format 1_0, a DCI format 1_1, a DCI format 1_2, and the like.

In addition, to ensure communication performance, the network device 110 needs to obtain channel information, to perform high-quality scheduling. However, currently, there is no related technical solution for how to feed back the channel information to the network device when the terminal device 120 receives a wake-up signal by using the second module. Therefore, both reducing power consumption of the terminal device 120 and ensuring communication performance cannot be effectively balanced.

Based on the foregoing technical problem, this application may provide a communication method 300, to reduce power consumption of a terminal device and also ensure communication performance.

FIG. 3 is a schematic flowchart of a communication method 300 according to an embodiment of this application. In this embodiment, an example in which a terminal device and a network device are used as execution bodies of interaction illustration is used to illustrate the method. However, the execution bodies of the interaction illustration are not limited in this application. For example, in FIG. 3, the terminal device may alternatively be a chip, a chip system, or a processor that supports the terminal device in implementing the method, or may be a logical module or software that can implement all or some functions of the terminal device; and the network device may alternatively be a chip, a chip system, or a processor that supports the network device in implementing the method, or may be a logical module or software that can implement all or some functions of the network device. When the method is executed by the chip, the chip system, the processor, the logic module, the software, or the like, sending and receiving in the following steps may be understood as communication implemented by using an input/output interface, a pin, a circuit, or the like.

The communication method 300 may include the following steps.

Step S310: The terminal device sends first information to the network device in a first time period, where the first time period includes a monitoring period of a first wake-up signal and/or a wake-up time period indicated by the first wake-up signal. Correspondingly, the network device receives the first information from the terminal device in the first time period.

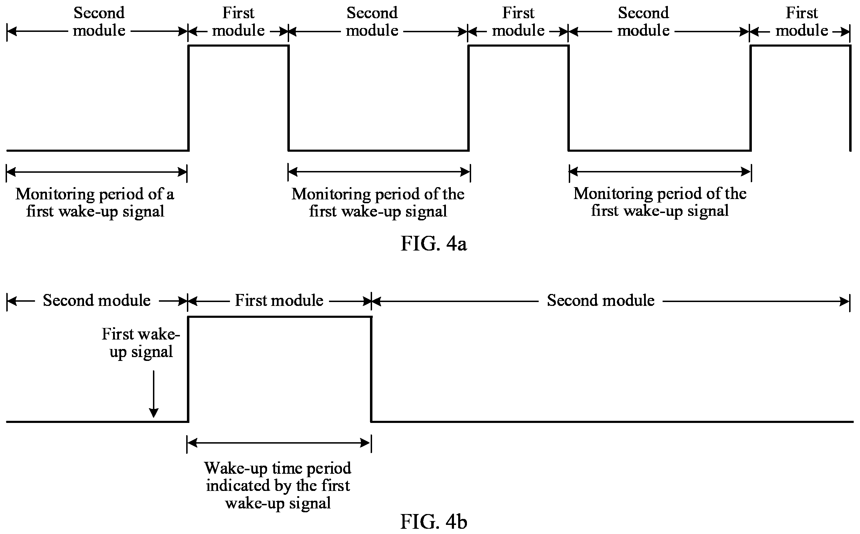

For example, the monitoring period of the first wake-up signal may be shown in FIG. 4a. The terminal device monitors the first wake-up signal in the monitoring period of the first wake-up signal by using a second module. In addition, the terminal device may further periodically trigger a first module to be turned on, to perform radio resource management (radio resource management, RRM) measurement and the like by using the first module.

Alternatively, when the terminal device periodically triggers a first module to be turned on, a second module may still be turned on. In this case, all time periods shown in FIG. 4a may be considered as the monitoring period of the first wake-up signal.

Alternatively, the terminal device continuously monitors the first wake-up signal in the monitoring period of the first wake-up signal by using a second module, and does not need to periodically trigger a first module to be turned on. In this case, all time periods shown in FIG. 4a are time periods in which the second module is turned on and the first module is turned off.

For example, the wake-up time period indicated by the first wake-up signal may be shown in FIG. 4b. If detecting the first wake-up signal associated with the terminal device, the terminal device triggers the first module to be turned on. The terminal device receives the first wake-up signal and obtains, through demodulation based on information carried in the first wake-up signal, wake-up indication information associated with the terminal device. That is, the terminal device is woken up, and triggers the first module to be turned on. Optionally, the wake-up time period indicated by the first wake-up signal is a time period from turn-on of the first module until the monitoring period of the first wake-up signal is entered again, and the wake-up time period indicated by the first wake-up signal may alternatively be infinite.

That the terminal device is in the monitoring period of the first wake-up signal may be understood as any one or more of the following:
The terminal device is in a state of monitoring the first wake-up signal, the terminal device is not in the wake-up time period indicated by the first wake-up signal, the terminal device is not in a running time period of a first timer, the terminal device operates by using the second module, the terminal device operates by using a wake-up circuit, the terminal device monitors the first wake-up signal, the terminal device monitors a signal modulated through OOK, the terminal device is in a monitoring time period of the first wake-up signal, or the like. The first timer is described below.

The monitoring period of the first wake-up signal may be used by the terminal device when one or more of the following conditions are satisfied:
Monitoring of the first wake-up signal is enabled, monitoring of the first wake-up signal is configured, monitoring of the first wake-up signal is used, monitoring of the first wake-up signal is activated, or the like. For example, when the terminal device is configured to monitor the first wake-up signal and signal quality of the first wake-up signal detected by the terminal device is greater than a preset quality threshold, monitoring of the first wake-up signal is enabled.

That the terminal device is in the wake-up time period indicated by the first wake-up signal may be understood as any one or more of the following:
The terminal device is in a state of monitoring a PDCCH, the terminal device is not in the monitoring period of the first wake-up signal, the terminal device is in the running time period of the first timer, the terminal device operates by using the first module, the terminal device operates by using a main circuit, the terminal device is monitoring the PDCCH, or the like.

For example, the first information includes at least one of the following:
a periodic sounding reference signal (periodic sounding reference signal, p-SRS), a semi-persistent sounding reference signal (semi-persistent sounding reference signal, sp-SRS), semi-persistent channel state information (semi-persistent channel state information, sp-CSI) on a physical uplink control channel (physical uplink control channel, PUCCH), sp-CSI configured on a physical uplink shared channel (physical uplink shared channel, PUSCH), periodic channel state information (periodic channel state information, p-CSI) on the PUCCH, and the like. The p-CSI on the PUCCH includes at least one of the following:
p-CSI including L1-reference signal received power (L1-reference signal received power, L1-RSRP) on the PUCCH, p-CSI not including the L1-RSRP on the PUCCH, and the like.

For example, that the terminal device sends the sp-CSI on the PUCCH may also be referred to as that the terminal device reports the sp-CSI on the PUCCH; that the terminal device sends the sp-CSI configured on the PUSCH may also be referred to as that the terminal device reports the sp-CSI configured on the PUSCH; and that the terminal device sends the p-CSI on the PUCCH may also be referred to as that the terminal device reports the p-CSI on the PUCCH.

The first information is configured at a second periodicity in time domain. The terminal device may send the first information to the network device in the first time period in the following two manners.

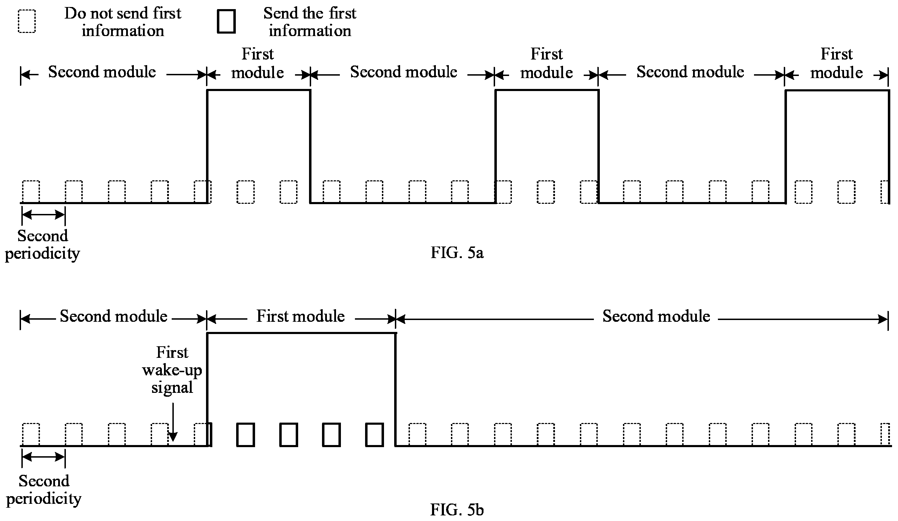

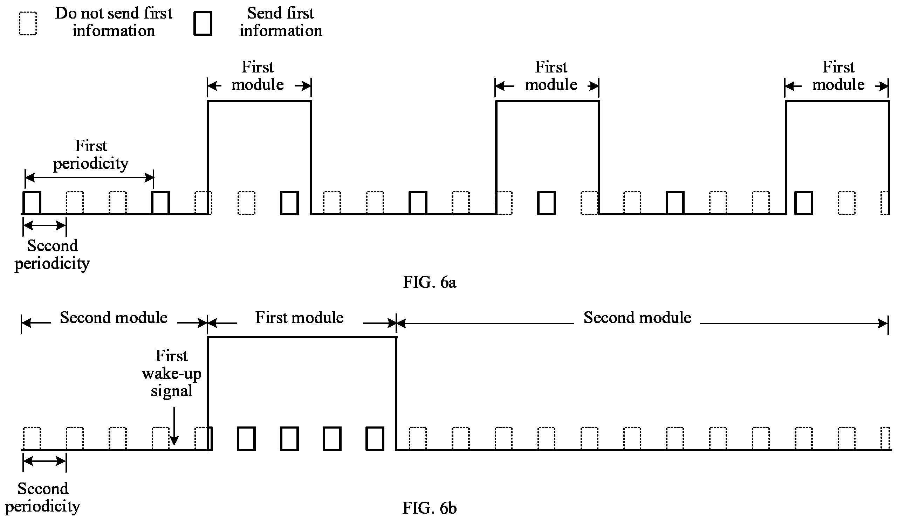

It should be noted that the terminal device is configured with resources for sending the first information. As shown in FIG. 5a, FIG. 5b, FIG. 6a, and FIG. 6b, the first information is configured at the second periodicity in time domain.

Manner 1: The terminal device does not send the first information in the monitoring period of the first wake-up signal, and the terminal device sends the first information in the wake-up time period indicated by the first wake-up signal, as shown in FIG. 5a and FIG. 5b.

As shown in FIG. 5a, the terminal device may not send the first information in the monitoring period of the first wake-up signal.

For example, as shown in FIG. 5b, the terminal device sends the first information at the second periodicity in the wake-up time period indicated by the first wake-up signal.

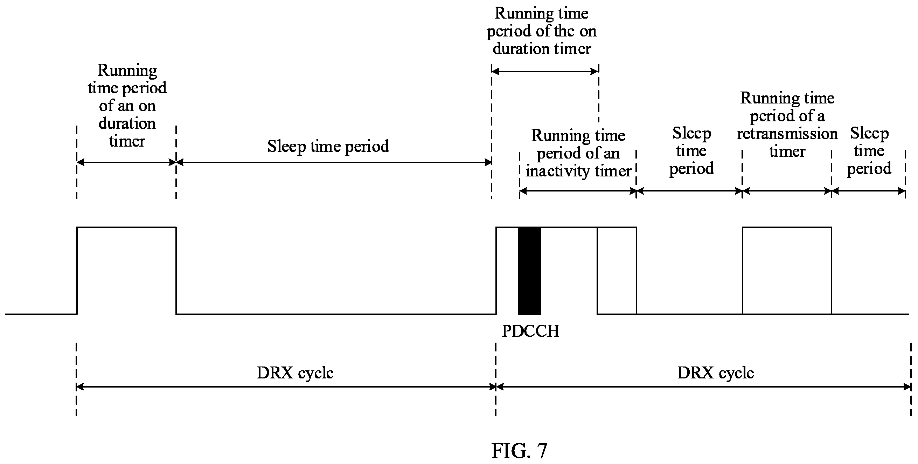

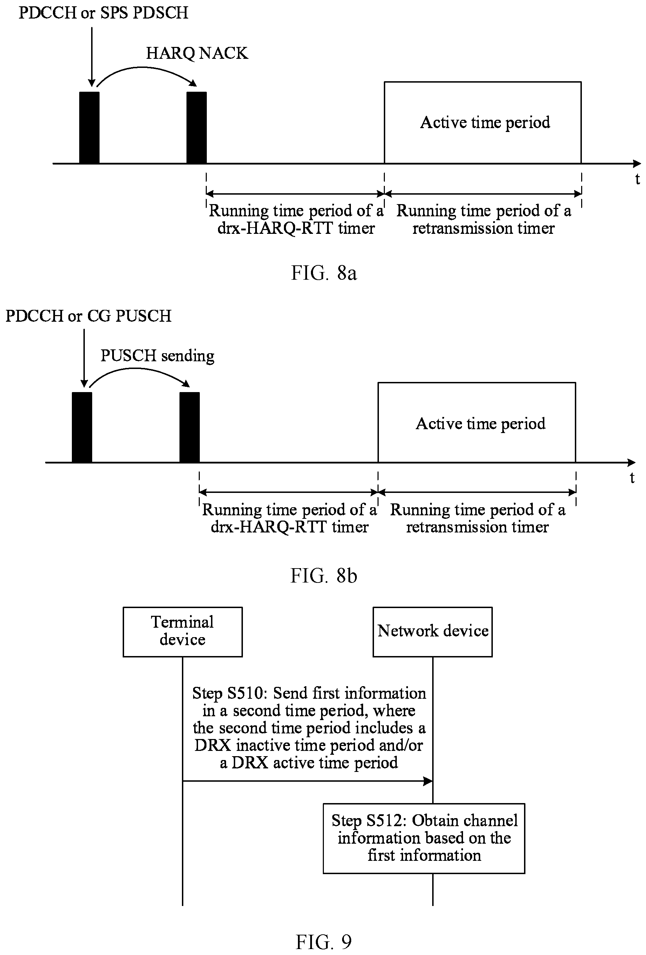

If the terminal device is further configured with a DRX mechanism, optionally, the terminal device does not send the first information in the monitoring period of the first wake-up signal and in a DRX on duration time period (that is, an on duration time period), and the terminal device sends the first information in the wake-up time period indicated by the first wake-up signal. In an example, even if the terminal device is in the on duration time period, and an on duration timer (drx-onDurationTimer) is started, or the on duration timer (drx-onDurationTimer) is running, the terminal device does not perform PDCCH monitoring. Specifically, even if the terminal device is currently in the on duration time period, and the on duration timer (drx-onDurationTimer) is running, whether the terminal device performs PDCCH monitoring may not be controlled by the DRX mechanism. Therefore, the terminal device may not perform PDCCH monitoring in the current on duration time period, but is still in the monitoring period of the first wake-up signal. In this case, the terminal device may not send the first information in the current on duration time period. For a DRX configuration of the terminal device in the DRX mechanism, refer to the following related descriptions corresponding to FIG. 7, FIG. 8a, and FIG. 8b. Details are not described herein.

Specifically, that the terminal device is in the monitoring period of the first wake-up signal and in the on duration time period may be understood as that a current time domain position of the terminal device is in both the monitoring period of the first wake-up signal and the on duration time period.

Generally, if the terminal device is configured with the DRX mechanism, the terminal device performs PDCCH monitoring in the on duration time period, and the terminal device does not perform PDCCH monitoring in a sleep time period. The terminal device is energy-efficient enough. Due to the introduction of the wake-up circuit and the first wake-up signal, the terminal device does not perform PDCCH monitoring in the on duration time period even if the on duration timer (drx-onDurationTimer) is started. Therefore, the on duration time period may also be a time period in which the terminal device does not perform PDCCH monitoring, or the monitoring period of the first wake-up signal may further include the on duration time period, or the on duration time period may further include the monitoring period of the first wake-up signal, or the monitoring period of the first wake-up signal partially overlaps the on duration time period.

If the terminal device is further configured with the DRX mechanism, optionally, the terminal device does not send, in the monitoring period of the first wake-up signal and not in the on duration time period, any information included in the first information.

Specifically, that the terminal device is in the monitoring period of the first wake-up signal and not in the on duration time period may be understood as that a current time domain position of the terminal device is in the monitoring period of the first wake-up signal and not in the on duration time period.

Optionally, the network device may further send indication information #1 to the terminal device. The indication information #1 indicates whether the terminal device sends the first information in the monitoring period of the first wake-up signal. Correspondingly, the terminal device receives the indication information #1 from the network device. Herein, that the indication information #1 indicates whether the terminal device sends the first information in the monitoring period of the first wake-up signal may be replaced with at least one of the following: The indication information #1 indicates that the terminal device sends the first information in the monitoring period of the first wake-up signal, or the indication information #1 indicates that the terminal device does not send the first information in the monitoring period of the first wake-up signal. That the indication information #1 is used for indication may be understood as: The indication is performed based on a value of the indication information #1 and/or whether the indication information #1 is carried in signaling/information sent by the network device to the terminal device. The indication information #1 may be an example of the first indication information. Optionally, the indication information #1 may indicate that the terminal device sends, in the monitoring period of the first wake-up signal, a part of information included in the first information. For example, the indication information #1 indicates that the terminal device sends, in the monitoring period of the first wake-up signal, the p-CSI including the L1-RSRP on the PUCCH and/or the p-CSI not including the L1-RSRP on the PUCCH that are/is included in the first information, but does not send other SRSs and CSI included in the first information, for example, the p-SRS, the sp-SRS, the sp-CSI on the PUCCH, and the sp-CSI configured on the PUSCH.

Optionally, the network device may further send the indication information #1 to the terminal device. The indication information #1 indicates whether the terminal device sends the first information in the monitoring period of the first wake-up signal and in the on duration time period. Correspondingly, the terminal device receives the indication information #1 from the network device. Herein, that the indication information #1 indicates whether the terminal device sends the first information in the monitoring period of the first wake-up signal and in the on duration time period may be replaced with at least one of the following: The indication information #1 indicates that the terminal device sends the first information in the monitoring period of the first wake-up signal and in the on duration time period, or the indication information #1 indicates that the terminal device does not send the first information in the monitoring period of the first wake-up signal and in the on duration time period. That the indication information #1 is used for indication may be understood as: The indication is performed based on a value of the indication information #1 and/or whether the indication information #1 is carried in signaling/information sent by the network device to the terminal device. The indication information #1 may be an example of the first indication information. Optionally, the indication information #1 may indicate that the terminal device sends, in the monitoring period of the first wake-up signal and in the on duration time period, a part of information included in the first information. For example, the indication information #1 indicates that the terminal device sends, in the monitoring period of the first wake-up signal and in the on duration time period, the p-CSI including the L1-RSRP on the PUCCH and/or the p-CSI not including the L1-RSRP on the PUCCH that are/is included in the first information, but does not send other SRSs and CSI included in the first information, for example, the p-SRS, the sp-SRS, the sp-CSI on the PUCCH, and the sp-CSI configured on the PUSCH. For example, when the indication information #1 carries a first value (true), or a field of the indication information #1 in a radio resource control (radio resource control, RRC) reconfiguration message is not present (not present/absent), it indicates that the terminal device needs to send the first information to the network device in the monitoring period of the first wake-up signal; or when the indication information #1 carries a second value (false) or a field of the indication information #1 in an RRC reconfiguration message is present (present), it indicates that the terminal device does not need to send the first information to the network device in the monitoring period of the first wake-up signal.

It should be noted that the communication method 300 is described uniformly with the first information configured at the second periodicity in time domain. Actually, multiple pieces of information in the first information may be configured at a plurality of different periodicities in time domain. For example, the p-SRS in the first information is configured at a periodicity #1, and the p-CSI in the first information is configured at a periodicity #2. This is not limited in this application. For example, the terminal device may receive one or more pieces of indication information #1 from the network device. If the terminal device receives one piece of indication information #1, the indication information #1 may indicate whether the terminal device separately sends, in the monitoring period of the first wake-up signal at periodicities corresponding to multiple pieces of information included in the first information, the multiple pieces of information included in the first information. If the terminal device receives multiple pieces of indication information #1, the multiple pieces of indication information #1 separately indicate whether the terminal device sends, in the monitoring period of the first wake-up signal at periodicities corresponding to multiple pieces of information included in the first information, the multiple pieces of information included in the first information.

Manner 2: The terminal device sends the first information at the first periodicity in the monitoring period of the first wake-up signal, and the terminal device sends the first information at the second periodicity in the wake-up time period indicated by the first wake-up signal, as shown in FIG. 6a and FIG. 6b.

The first periodicity is greater than the second periodicity. For example, the first periodicity may be configured by a network for the terminal device, or may be specified in a protocol. This is not limited in this application. For example, the first periodicity may be a multiple of the second periodicity. In this case, the first periodicity may also be referred to as a relaxed periodicity of the second periodicity, that is, the first periodicity is equal to the second periodicity multiplied by a relaxation factor. The relaxation factor may be configured by the network for the terminal device, or may be specified in a protocol. This is not limited in this application.

As shown in FIG. 6a, the terminal device may send the first information at the first periodicity in the monitoring period of the first wake-up signal.

As shown in FIG. 6b, the terminal device may send the first information at the second periodicity in the wake-up time period indicated by the first wake-up signal.

If the terminal device is further configured with a DRX mechanism, optionally, the terminal device sends the first information at the first periodicity in the monitoring period of the first wake-up signal and in the on duration time period, and the terminal device sends the first information at the second periodicity in the wake-up time period indicated by the first wake-up signal. In an example, even if the terminal device is in the on duration time period, and an on duration timer (drx-onDurationTimer) is started, or the on duration timer (drx-onDurationTimer) is running, the terminal device does not perform PDCCH monitoring. Specifically, even if the terminal device is currently in the on duration time period, and the on duration timer (drx-onDurationTimer) is running, whether the terminal device performs PDCCH monitoring may not be controlled by the DRX mechanism. Therefore, the terminal device may not perform PDCCH monitoring in the current on duration time period, but is still in the monitoring period of the first wake-up signal. In this case, the terminal device may send the first information at the first periodicity in the current on duration time period.

If the terminal device is further configured with the DRX mechanism, optionally, the terminal device does not send, in the monitoring period of the first wake-up signal and not in the on duration time period, any information included in the first information.

Optionally, the network device may further send indication information #2 to the terminal device. The indication information #2 indicates whether the terminal device sends the first information at the first periodicity in the monitoring period of the first wake-up signal. Correspondingly, the terminal device receives the indication information #2 from the network device. Herein, that the indication information #2 indicates whether the terminal device sends the first information at the first periodicity in the monitoring period of the first wake-up signal may be replaced with at least one of the following: The indication information #2 indicates that the terminal device sends the first information at the first periodicity in the monitoring period of the first wake-up signal, or the indication information #2 indicates that the terminal device does not send the first information at the first periodicity in the monitoring period of the first wake-up signal. That the indication information #2 is used for indication may be understood as: The indication is performed based on a value of the indication information #2 and/or whether the indication information #2 is carried in signaling/information sent by the network device to the terminal device. The indication information #2 may be an example of the first indication information. Optionally, the indication information #2 may indicate that the terminal device sends, at the first periodicity in the monitoring period of the first wake-up signal, a part of information included in the first information. For example, the indication information #2 indicates that the terminal device sends, at the first periodicity in the monitoring period of the first wake-up signal, the p-CSI including the L1-RSRP on the PUCCH and/or the p-CSI not including the L1-RSRP on the PUCCH that are/is included in the first information, but does not send other SRSs and CSI included in the first information, for example, the p-SRS, the sp-SRS, the sp-CSI on the PUCCH, and the sp-CSI configured on the PUSCH.

Optionally, the network device may further send the indication information #2 to the terminal device. The indication information #2 indicates whether the terminal device sends the first information at the first periodicity in the monitoring period of the first wake-up signal and in the on duration time period. Correspondingly, the terminal device receives the indication information #2 from the network device. Herein, that the indication information #2 indicates whether the terminal device sends the first information at the first periodicity in the monitoring period of the first wake-up signal and in the on duration time period may be replaced with at least one of the following: The indication information #2 indicates that the terminal device sends the first information at the first periodicity in the monitoring period of the first wake-up signal and in the on duration time period, or the indication information #2 indicates that the terminal device does not send the first information at the first periodicity in the monitoring period of the first wake-up signal and in the on duration time period. That the indication information #2 is used for indication may be understood as: The indication is performed based on a value of the indication information #2 and/or whether the indication information #2 is carried in signaling/information sent by the network device to the terminal device. The indication information #2 may be an example of the first indication information. Optionally, the indication information #2 may indicate that the terminal device sends, at the first periodicity in the monitoring period of the first wake-up signal and in the on duration time period, a part of information included in the first information. For example, the indication information #2 indicates that the terminal device sends, at the first periodicity in the monitoring period of the first wake-up signal and in the on duration time period, the p-CSI including the L1-RSRP on the PUCCH and/or the p-CSI not including the L1-RSRP on the PUCCH included in the first information, but does not send other SRSs and CSI included in the first information, for example, the p-SRS, the sp-SRS, the sp-CSI on the PUCCH, and the sp-CSI configured on the PUSCH.

For example, when the indication information #2 carries a first value (true), a field of the indication information #2 in an RRC reconfiguration message is not present (not present/absent), the indication information #2 indicates the relaxation factor, the indication information #2 indicates the first periodicity, or the network device configures the relaxation factor, it indicates that the terminal device needs to send the first information at the first periodicity in the first wake-up signal monitoring period; or when the indication information #2 carries a second value (false), a field of the indication information #2 in the RRC reconfiguration message is present (present), the indication information #2 does not indicate the relaxation factor, or the network device does not configure the relaxation factor, it indicates that the terminal device needs to send the first information at the second periodicity in the monitoring period of the first wake-up signal, or the terminal device does not need to send the first information to the network device in the monitoring period of the first wake-up signal.

It should be noted that the communication method 300 is described uniformly with the first information configured at the second periodicity in time domain. Actually, multiple pieces of information in the first information may be configured at a plurality of different periodicities in time domain. For example, the p-SRS in the first information is configured at a periodicity #1, and the p-CSI in the first information is configured at a periodicity #2. This is not limited in this application. For example, the terminal device may receive one or more pieces of indication information #2 from the network device. If the terminal device receives one piece of indication information #2, the indication information #2 may indicate whether the terminal device separately sends, at periodicities corresponding to multiple pieces of information included in the first information, the multiple pieces of information included in the first information. If the terminal device receives multiple pieces of indication information #2, the multiple pieces of indication information #2 separately indicate whether the terminal device sends, at periodicities corresponding to multiple pieces of information included in the first information, the multiple pieces of information included in the first information.

For example, the indication information #1 and the indication information #2 may be same indication information, and the same indication information is denoted as the first indication information. The first indication information indicates that the terminal device sends the first information to the network device at the second periodicity in the monitoring period of the first wake-up signal, the first indication information indicates that the terminal device sends the first information to the network device at the first periodicity in the monitoring period of the first wake-up signal, or the first indication information indicates the terminal device does not send the first information to the network device in the monitoring period of the first wake-up signal.

Manner 1 and Manner 2 may also be used in combination. The terminal device sends a part of information in the first information in Manner 1, and the terminal device sends the remaining part of information in the first information in Manner 2. For example, the terminal device sends, at the first periodicity in the monitoring period of the first wake-up signal, the p-CSI including the L1-RSRP on the PUCCH and the p-CSI not including the L1-RSRP on the PUCCH that are included in the first information, and the terminal device does not send, in the monitoring period of the first wake-up signal, other SRSs and CSI included in the first information. For example, the terminal device does not send, in the monitoring period of the first wake-up signal, the p-SRS, the sp-SRS, the sp-CSI on the PUCCH, and the sp-CSI configured on the PUSCH. The terminal device sends, at the second periodicity in the wake-up time period indicated by the first wake-up signal, any one or more pieces of information included in the first information.

For example, whether the terminal device sends, to the network device, the p-CSI including the L1-RSRP on the PUCCH included in the first information may be configured based on indication information #1-1. If the indication information #1-1 is configured as true, the terminal device sends, to the network device, the p-CSI including the L1-RSRP on the PUCCH. If the indication information #1-1 is not configured as true, the terminal device does not send, to the network device, the p-CSI including the L1-RSRP on the PUCCH. Whether the terminal device sends, to the network device, the p-CSI not including the L1-RSRP on the PUCCH included in the first information may be configured based on indication information #1-2. If the indication information #1-2 is configured as true, the terminal device sends, to the network device, the p-CSI not including the L1-RSRP on the PUCCH. If the indication information #1-2 is not configured as true, the terminal device does not send, to the network device, the p-CSI not including the L1-RSRP on the PUCCH.

An implementation of the wake-up time period indicated by the first wake-up signal is: The wake-up time period indicated by the first wake-up signal may be a running time period of the first timer. Specifically, the terminal device detects the first wake-up signal associated with the terminal device; the terminal device starts the first timer in response to detecting the first wake-up signal; and the terminal device sends the first information to the network device in the running time period of the first timer.

Another implementation of the wake-up time period indicated by the first wake-up signal is: The terminal device detects the first wake-up signal associated with the terminal device, where the first wake-up signal carries second indication information, and the second indication information indicates that the terminal device sends the first information; and the terminal device receives third indication information from the network device, where the third indication information indicates that the terminal device stops sending the first information, or the third indication information indicates that the terminal device does not send the first information.

After receiving the second indication information, the terminal device may immediately turn on the first module to send the first information; or the second indication information may further indicate time at which the terminal device sends the first information, and the terminal device may wait, after receiving the second indication information, until the time at which the terminal device sends the first information indicated by the second indication information, and then turn on the first module to send the first information. This is not limited in this application. Similarly, after receiving the third indication information, the terminal device may immediately stop sending the first information; or the third indication information may further indicate time at which the terminal device stops sending the first information, and the terminal device may wait, after receiving the third indication information, until the time at which the terminal device stops sending the first information indicated by the third indication information, and then stop sending the first information. This is not limited in this application.

Step S312: The network device obtains channel information based on the first information.

For example, the network device may perform uplink channel estimation based on the p-SRS, the sp-SRS, or the like, to obtain uplink channel information; and the network device may obtain downlink channel information based on the sp-CSI on the PUCCH, the sp-CSI configured on the PUSCH, the p-CSI on the PUCCH, or the like.

According to the communication method 300, when receiving a signal by using the second module, the terminal device can feed back channel information to the network device, so that low power consumption of the terminal device can be achieved, and communication performance can also be ensured.

The technical solutions of this application are also applicable to a communication system using a discontinuous reception (discontinuous reception, DRX) mechanism, that is, the terminal device is configured to run in the DRX mechanism.

The DRX mechanism may enable the terminal device to periodically enter a sleep mode (sleep mode) in a specific period of time and not to monitor a PDCCH. When the monitoring needs to be performed, the terminal device wakes up (wakes up) from the sleep mode. In this way, the terminal device can achieve power saving.

FIG. 7 shows a typical DRX cycle. As shown in FIG. 7, in this application, one DRX cycle may include a wake-up (On Duration) time period and a sleep time period. The wake-up (On Duration) time period may also be referred to as an on duration (On Duration) time period, or may have another name. This is not limited in this application.

As shown in FIG. 7, in the on duration time period, a terminal device monitors a PDCCH, and in the time period, the terminal device is in a wake-up state.

The sleep time period may also be referred to as an opportunity for DRX (Opportunity for DRX) time period. The terminal device may not perform data transmission in the sleep time period. Longer time for the terminal device to sleep indicates lower power consumption of the terminal device.

In a DRX mechanism, the terminal device may receive downlink data and an uplink grant in an active time period. Alternatively, the terminal device may use a plurality of types of timers to cooperate in a radio resource control (Radio Resource Control, RRC) connected state, to ensure receiving of the downlink data and the uplink grant. The following describes the plurality of timers in detail.

By way of example, and not limitation, in this application, the network device may configure a DRX cycle for the terminal device, and the DRX cycle may be a long DRX cycle. Alternatively, the DRX cycle may be a short DRX cycle (short DRX cycle) and a long DRX cycle (long DRX cycle). In a specific service scenario, when a short DRX cycle is configured for the terminal device, the terminal device may run a short-cycle timer (drx-ShortCycleTimer) corresponding to the short DRX cycle. When the short-cycle timer expires, the terminal device runs a timer corresponding to the long DRX cycle.

DRX includes at least one of the following parameters:
a DRX cycle, a running time period of an on duration timer (drx-onDurationTimer), a running time period of an inactivity timer (drx-InactivityTimer), a running time period of a retransmission timer (drx-RetransmissionTimer), and the like.

The following describes, by way of examples, a plurality of timers used in the DRX mechanism.

### 1. On duration timer (drx-onDurationTimer)

The drx-onDurationTimer is configured to determine a duration of a wake-up time period. During running of the drx-onDurationTimer, or before expiration of the drx-onDurationTimer, a terminal device is in the wake-up (On Duration) time period, and the terminal device may turn on a receive antenna to monitor a PDCCH.

### 2. Inactivity timer (drx-InactivityTimer)

Specifically, it is assumed that a subframe 0 is a last subframe in an on duration time period. In this case, a network device sends a large amount of data to a terminal device, and the data cannot be completely sent in the subframe 0. If the drx-onDurationTimer is used, the terminal device enters a sleep time period in a subframe 1, does not monitor a PDCCH, and cannot receive data on a physical downlink shared channel (physical downlink shared channel, PDSCH) from the network device either. When a current DRX cycle ends, and a next on duration time period arrives, the network device continues to send, to the terminal device, data that has not been completely sent. Although this processing mechanism is correct, a processing delay of all services is significantly increased. To avoid this case, when the terminal device detects the PDCCH in the on duration time period, the drx-InactivityTimer is added to the DRX mechanism. If the drx-InactivityTimer is running, even if the originally configured drx-onDurationTimer expires (that is, the on duration time period ends), the terminal device still needs to continue to monitor a PDCCH subframe until the drx-InactivityTimer expires. After a drx-Inactivity mechanism is added, a data processing delay is significantly reduced.

### 3. Retransmission timer (drx-RetransmissionTimer)

In the DRX mechanism, when a terminal device receives a PDCCH indicating downlink (downlink, DL) transmission or receives a semi-persistent scheduling (semi-persistent scheduling, SPS) PDSCH, if the terminal device fails to receive data, retransmission needs to be performed. As shown in FIG. 8a, after the terminal device feeds back a hybrid automatic repeat request (hybrid automatic repeat request, HARQ) negative acknowledgment (negative acknowledgment, NACK) to the network device, the terminal device starts a drx-HARQ-RTT Timer for a corresponding HARQ process. The drx-HARQ-RTT Timer indicates a minimum duration in which the terminal device expects to receive HARQ retransmission indication information. In other words, the terminal device does not expect to receive downlink retransmission indication information during the drx-HARQ-RTT Timer. After the drx-HARQ-RTT Timer expires, the terminal device starts a drx-Retransmission Timer DL. The drx-Retransmission Timer DL indicates a maximum duration in which the terminal device receives the DL retransmission indication information. During the drx-Retransmission Timer DL, the terminal device is in an active state, and receives retransmission of a PDCCH and a PDSCH. In other words, the drx-Retransmission Timer DL refers to a time length for detecting, after the drx-HARQ-RTT Timer expires, the PDCCH by the UE to receive data that fails to be transmitted and needs to be retransmitted.

Similarly, for uplink (uplink, UL) transmission, as shown in FIG. 8b, when the terminal device receives a PDCCH indicating uplink transmission or receives a configured grant (configured grant, CG) PUSCH, after completing uplink PUSCH transmission, the terminal device starts a drx-HARQ-RTT Timer for a corresponding HARQ process. The drx-HARQ-RTT Timer indicates a minimum duration in which the terminal device expects to receive HARQ retransmission indication information. In other words, the terminal device does not expect to receive uplink retransmission indication information during the drx-HARQ-RTT Timer. After the drx-HARQ-RTT Timer expires, the terminal device starts a drx-Retransmission Timer UL. The drx-Retransmission Timer UL indicates a maximum duration in which the terminal device receives the UL retransmission indication information. During the drx-Retransmission Timer UL, the terminal device is in an active state, and receives a PDCCH indicating retransmission of a PUSCH. In other words, the drx-Retransmission Timer UL refers to a time length for detecting, after the drx-HARQ-RTT Timer expires, the PDCCH by the UE to send data that fails to be transmitted and needs to be retransmitted.

It should be understood that the foregoing enumerated timers are merely examples for description. This is not limited in this application.

According to the technical solutions of this application, an operating mechanism in which a terminal device receives a wake-up signal by using a second module may be further used in combination with a DRX mechanism. In other words, when the terminal device is in a DRX active time period, a PDCCH monitoring procedure is performed; and when the terminal device is not in the DRX active time period, the operating mechanism in which the terminal device receives the wake-up signal by using the second module is entered. This application may provide a method 400 for the terminal device to determine whether the current time domain position is in the DRX active time period.

The terminal device may determine, based on second information, whether the current time domain position is in the DRX active time period. The second information includes at least one of the following:
whether the terminal device detects the first wake-up signal until a time period of a first time length prior to the current time domain position of the terminal device; whether the terminal device receives an uplink grant (grant), a downlink assignment (assignment), a DRX command medium access control (medium access control, MAC) control element (control element, CE) (DRX Command MAC CE), or a long DRX command MAC CE (Long DRX Command MAC CE) from the network device until a time period of a second time length prior to the current time domain position of the terminal device; and whether the terminal device sends scheduling request (scheduling request, SR) signaling to the network device until a time period of a third time length prior to the current time domain position.

Optionally, the terminal device may determine, based on second information, that the current time domain position is in or not in the DRX active time period. The second information includes at least one of the following:
The terminal device detects the first wake-up signal until a time period of a first time length prior to the current time domain position of the terminal device; the terminal device receives an uplink grant (grant), a downlink assignment (assignment), a DRX command medium access control (medium access control, MAC) control element (control element, CE) (DRX Command MAC CE), or a long DRX command MAC CE (Long DRX Command MAC CE) from the network device until a time period of a second time length prior to the current time domain position of the terminal device; and the terminal device sends scheduling request (scheduling request, SR) signaling to the network device until a time period of a third time length prior to the current time domain position.

Whether the terminal device detects the first wake-up signal is: whether the terminal device detects the first wake-up signal associated with the terminal device, that is, whether the first wake-up signal indicates that the terminal device wakes up.

For example, the first time length is greater than or equal to a fourth time length, the second time length may be 4 milliseconds (ms), and the third time length may be 4 ms. This is not limited in this application. The fourth time length is a time length in which the terminal device switches from the second module to the first module after the terminal device detects the first wake-up signal.

For example, a current subframe (subframe) of the terminal device is a subframe 6. If the terminal device does not receive the first wake-up signal from the network device in a subframe 1 or a subframe 2, the terminal device determines that the current subframe 6 is not in the DRX active time period. Alternatively, the current subframe of the terminal device is a subframe 6. If the terminal device does not receive the uplink grant from the network device in the subframe 1 or the subframe 2, the terminal device determines that the current subframe 6 is not in the DRX active time period. Alternatively, the current subframe of the terminal device is a subframe 6. If the terminal device does not receive the DRX Command MAC CE from the network device in the subframe 1 or the subframe 2, the terminal device determines that the current subframe 6 is not in the DRX active time period. That the terminal device is not in the DRX active time period may be understood as that the terminal device is in a DRX inactive time period. Hereinafter, a time period not in the DRX active time period is uniformly referred to as the DRX inactive time period.

For example, the DRX active time period may include a running time period of an on duration timer (drx-onDurationTimer), a running time period of an inactivity timer (drx-InactivityTimer), a running time period of a retransmission timer (drx-RetransmissionTimer), a running time period of a random access contention resolution timer (ra-ContentionResolutionTimer), a running time period of a message B response window (msgB-ResponseWindow), a time period in which an SR is sent and in a suspended state, and the like. This is not limited in this application.

If a terminal device is configured with DRX and performs downlink reception through the DRX, this application may provide a communication method 500. According to the communication method 500, the terminal device can feed back channel information to a network device when being configured with the DRX, so that power consumption of the terminal device can be reduced, and communication performance can also be ensured.

FIG. 9 is a schematic flowchart of a communication method 500 according to an embodiment of this application. In this embodiment, an example in which a terminal device and a network device are used as execution bodies of interaction illustration is used to illustrate the method. However, the execution bodies of the interaction illustration are not limited in this application. For example, in FIG. 9, the terminal device may alternatively be a chip, a chip system, or a processor that supports the terminal device in implementing the method, or may be a logical module or software that can implement all or some functions of the terminal device; and the network device may alternatively be a chip, a chip system, or a processor that supports the network device in implementing the method, or may be a logical module or software that can implement all or some functions of the network device. When the method is executed by the chip, the chip system, the processor, the logic module, the software, or the like, sending and receiving in the following steps may be understood as communication implemented by using an input/output interface, a pin, a circuit, or the like.

The communication method 500 may include the following steps.

Step S510: The terminal device sends first information to the network device in a second time period, where the second time period includes a DRX inactive time period and/or a DRX active time period. Correspondingly, the network device receives the first information from the terminal device in the second time period. The DRX inactive time period may be understood as that the terminal device is not in the DRX active time period.

Specifically, in the communication method 500, monitoring of the first wake-up signal may be enabled, monitoring of the first wake-up signal may be configured, monitoring of the first wake-up signal may be used, monitoring of the first wake-up signal may be performed, monitoring of the first wake-up signal by the terminal device may be enabled, monitoring of the first wake-up signal by the terminal device may be configured, a monitoring function for the first wake-up signal may be used by the terminal device, monitoring of the first wake-up signal is activated by the terminal device, or the like.

The terminal device may send the first information to the network device in the second time period in the following two manners.

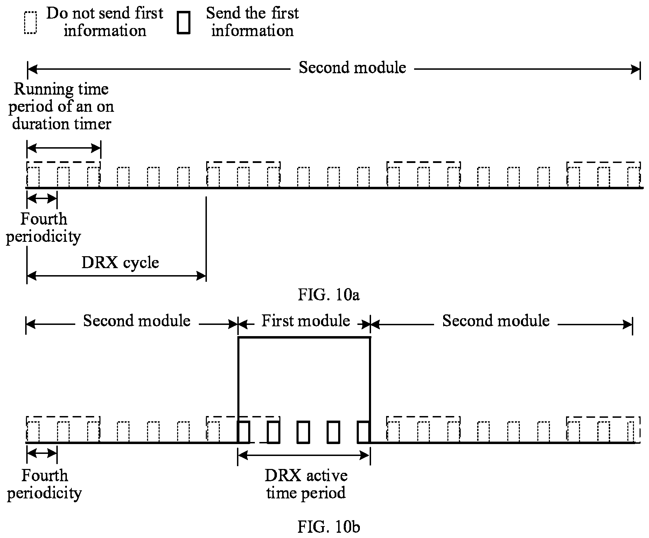

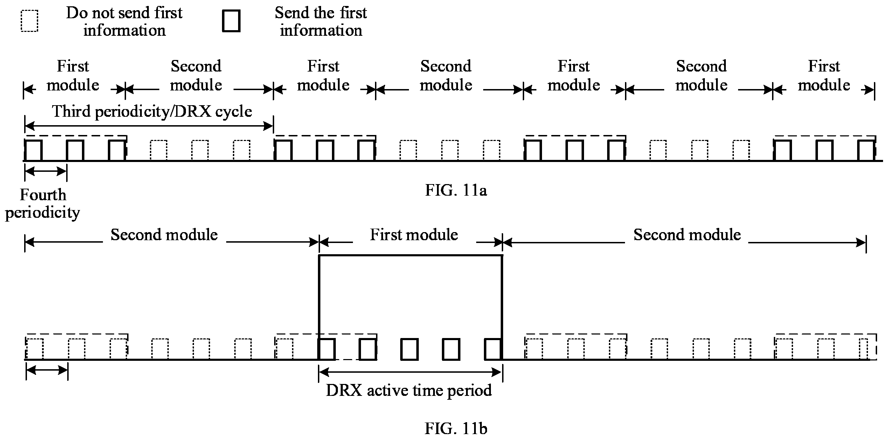

It should be noted that the terminal device is configured with DRX and resources for sending the first information. As shown in FIG. 10a, FIG. 10b, FIG. 11a, and FIG. 11b, the first information is configured at a fourth periodicity in time domain.

Manner 1: The terminal device does not send the first information in the DRX inactive time period, and the terminal device sends the first information in the DRX active time period, as shown in FIG. 10a and FIG. 10b.

It should be noted that, whether a current time domain position of the terminal device is in the DRX active time period may be determined according to the method 400, or may be determined according to another method. This is not limited in this application.

As shown in FIG. 10a, the terminal device may not send the first information in the DRX inactive time period.

For example, as shown in FIG. 10b, the terminal device sends the first information at the fourth periodicity in the DRX active time period.

Optionally, the terminal device does not send the first information in the DRX inactive time period and in an on duration time period, and the terminal device sends the first information in the DRX active time period. In an example, the terminal device is in the on duration time period, but an on duration timer (drx-onDurationTimer) is not started, or the on duration timer (drx-onDurationTimer) is not running, and the terminal device does not perform PDCCH monitoring. Specifically, if no other DRX-related timers (for example, the on duration timer (drx-onDurationTimer), the inactivity timer (drx-InactivityTimer), or the retransmission timer (drx-RetransmissionTimer)) are running in the current on duration time period, and there is no case described in the method 400 that causes the terminal device to be in the DRX active time period, it may be considered that the current on duration time period is the DRX inactive time period, and the terminal device may not perform PDCCH monitoring in the current on duration time period. In this case, the terminal device may not send the first information in the current on duration time period.

Generally, the on duration time period is the DRX active time period, and is not the DRX inactive time period. The terminal device may not send any information in the DRX inactive time period. The terminal device is energy-efficient enough. Due to the introduction of a wake-up circuit and the first wake-up signal, the terminal device does not start the on duration timer (drx-onDurationTimer) in the on duration time period. Therefore, the DRX inactive time period may further include the on duration time period, or the on duration time period may further include the DRX inactive time period, or the DRX inactive time period partially overlaps the on duration time period.

Optionally, the terminal device does not send, in the DRX inactive time period and not in the on duration time period, any information included in the first information.

Optionally, the network device may further send indication information #3 to the terminal device. The indication information #3 indicates whether the terminal device sends the first information in the DRX inactive time period. Correspondingly, the terminal device receives the indication information #3 from the network device. The indication information #3 may be an example of fourth indication information. Optionally, the indication information #3 may indicate that the terminal device sends, in the DRX inactive time period, a part of information included in the first information. For example, the indication information #3 indicates that the terminal device sends, in the DRX inactive time period, p-CSI including L1-RSRP on a PUCCH and/or p-CSI not including the L1-RSRP on the PUCCH that are/is included in the first information, but does not send other SRSs and CSI included in the first information, for example, a p-SRS, an sp-SRS, sp-CSI on the PUCCH, and sp-CSI configured on a PUSCH.

Optionally, the network device may further send the indication information #3 to the terminal device. The indication information #3 indicates whether the terminal device sends the first information in the DRX inactive time period and in the on duration time period. Correspondingly, the terminal device receives the indication information #3 from the network device. Herein, that the indication information #3 indicates whether the terminal device sends the first information in the DRX inactive time period and in the on duration time period may be replaced with at least one of the following: The indication information #3 indicates that the terminal device sends the first information in the DRX inactive time period and in the on duration time period, or the indication information #3 indicates that the terminal device does not send the first information in the DRX inactive time period and in the on duration time period. That the indication information #3 is used for indication may be understood as: The indication is performed based on a value of the indication information #3 and/or whether the indication information #3 is carried in signaling/information sent by the network device to the terminal device. The indication information #3 may be an example of fourth indication information. Optionally, the indication information #3 may indicate that the terminal device sends, in the DRX inactive time period and in the on duration time period, a part of information included in the first information. For example, the indication information #3 indicates that the terminal device sends, in the DRX inactive time period and in the on duration time period, p-CSI including L1-RSRP on a PUCCH and/or p-CSI not including the L1-RSRP on the PUCCH that are/is included in the first information, but does not send other SRSs and CSI included in the first information, for example, a p-SRS, an sp-SRS, sp-CSI on the PUCCH, and sp-CSI configured on a PUSCH.

For example, when the indication information #3 carries a first value (true) or a field in indication information #2 in an RRC reconfiguration message is not present (not present/absent), it indicates that the terminal device needs to send the first information to the network device in the DRX inactive time period; or the indication information #3 carries a second value (false) or a field in indication information #1 in an RRC reconfiguration message is present (present), it indicates that the terminal device does not need to send the first information to the network device in the DRX inactive time period.

It should be noted that the communication method 500 is described uniformly with the first information configured at the fourth periodicity in time domain. Actually, multiple pieces of information in the first information may be configured at a plurality of different periodicities in time domain. For example, the p-SRS in the first information is configured at a periodicity #3, and the p-CSI in the first information is configured at a periodicity #4. This is not limited in this application. For example, the terminal device may receive one or more pieces of indication information #3 from the network device. If the terminal device receives one piece of indication information #3, the indication information #3 may indicate whether the terminal device separately sends, in the monitoring period of the first wake-up signal at periodicities corresponding to multiple pieces of information included in the first information, the multiple pieces of information included in the first information. If the terminal device receives multiple pieces of indication information #3, the multiple pieces of indication information #3 separately indicate whether the terminal device sends, in the monitoring period of the first wake-up signal at periodicities corresponding to multiple pieces of information included in the first information, the multiple pieces of information included in the first information.

Manner 2: The terminal device sends the first information at a third periodicity in the DRX inactive time period, and the terminal device sends the first information at a fourth periodicity in the DRX active time period, as shown in FIG. 11a and FIG. 11b.

The third periodicity is greater than the fourth periodicity. For example, the third periodicity may be configured by a network for the terminal device, or may be specified in a protocol. This is not limited in this application. For example, the third periodicity may be a multiple of the fourth periodicity. In this case, the third periodicity may also be referred to as a relaxed periodicity of the fourth periodicity, that is, the third periodicity is equal to the fourth periodicity multiplied by a relaxation factor. The relaxation factor may be configured by the network for the terminal device, or may be specified in a protocol. This is not limited in this application.

For example, the third periodicity may also be a DRX cycle, that is, the terminal device sends the first information at the DRX cycle in a running time period of the on duration timer.

As shown in FIG. 11a, the terminal device may send the first information at the DRX cycle in the DRX inactive time period.

As shown in FIG. 11b, the terminal device may send the first information at the fourth periodicity in the DRX active time period.

Optionally, the terminal device sends the first information at the third periodicity in the DRX inactive time period and in the on duration time period, and the terminal device sends the first information in the DRX active time period. In an example, the terminal device is in the on duration time period, but the on duration timer (drx-onDurationTimer) is not started, and the terminal device does not perform PDCCH monitoring. Specifically, if no other DRX-related timers (for example, the on duration timer (drx-onDurationTimer), the inactivity timer (drx-InactivityTimer), or the retransmission timer (drx-RetransmissionTimer)) are running in the current on duration time period, and there is no case described in the method 400 that causes the terminal device to be in the DRX active time period, it may be considered that the current on duration time period is the DRX inactive time period, and the terminal device may not perform PDCCH monitoring in the current on duration time period. In this case, the terminal device may send the first information at the third periodicity in the current on duration time period.

Optionally, the terminal device does not send, in the DRX inactive time period and not in the on duration time period, any information included in the first information.

Optionally, the network device may further send indication information #4 to the terminal device. The indication information #4 indicates whether the terminal device sends the first information at the third periodicity (for example, the DRX cycle) in the DRX inactive time period. Correspondingly, the terminal device receives the indication information #4 from the network device. The indication information #4 may be an example of fourth indication information. Optionally, the indication information #4 may indicate that the terminal device sends, at the third periodicity in the DRX inactive time period, a part of information included in the first information. For example, the indication information #4 indicates that the terminal device sends, at the third periodicity in the DRX inactive time period, p-CSI including L1-RSRP on a PUCCH and/or p-CSI not including the L1-RSRP on the PUCCH that are/is included in the first information, but does not send other SRSs and CSI included in the first information, for example, a p-SRS, an sp-SRS, sp-CSI on the PUCCH, and sp-CSI configured on a PUSCH.

Optionally, the network device may further send the indication information #4 to the terminal device. The indication information #4 indicates whether the terminal device sends the first information at the third periodicity (for example, the DRX cycle) in the DRX inactive time period and in the on duration time period. Correspondingly, the terminal device receives the indication information #4 from the network device. Herein, that the indication information #4 indicates whether the terminal device sends the first information at the third periodicity in the DRX inactive time period and in the on duration time period may be replaced with at least one of the following: The indication information #4 indicates that the terminal device sends the first information at the third periodicity in the DRX inactive time period and in the on duration time period, or the indication information #4 indicates that the terminal device does not send the first information at the third periodicity in the DRX inactive time period and in the on duration time period. That the indication information #4 is used for indication may be understood as: The indication is performed based on a value of the indication information #4 and/or whether the indication information #4 is carried in signaling/information sent by the network device to the terminal device. The indication information #4 may be an example of fourth indication information. Optionally, the indication information #4 may indicate that the terminal device sends, at the third periodicity in the DRX inactive time period and in the on duration time period, a part of information included in the first information. For example, the indication information #4 indicates that the terminal device sends, at the third periodicity in the DRX inactive time period and in the on duration time period, p-CSI including L1-RSRP on a PUCCH and/or p-CSI not including the L1-RSRP on the PUCCH that are/is included in the first information, but does not send other SRSs and CSI included in the first information, for example, a p-SRS, an sp-SRS, sp-CSI on the PUCCH, and sp-CSI configured on a PUSCH.

For example, when the indication information #4 carries a first value (true), a field of the indication information #4 in an RRC reconfiguration message is not present (not present/absent), the indication information #4 indicates a relaxation factor, the indication information #2 indicates a first periodicity, or the network device configures the relaxation factor, it indicates that the terminal device needs to send the first information at the third periodicity in the DRX inactive time period; or when the indication information #4 carries a second value (false), a field of the indication information #2 in the RRC reconfiguration message is present (present), the indication information #4 does not indicate the relaxation factor, or the network device does not configure the relaxation factor, it indicates that the terminal device needs to send the first information at the fourth periodicity in the DRX inactive time period, or the terminal device does not need to send the first information to the network device in the monitoring period of the first wake-up signal.

It should be noted that the communication method 500 is described uniformly with the first information configured at the fourth periodicity in time domain. Actually, multiple pieces of information in the first information may be configured at a plurality of different periodicities in time domain. For example, the p-SRS in the first information is configured at a periodicity #3, and the p-CSI in the first information is configured at a periodicity #4. This is not limited in this application. For example, the terminal device may receive one or more pieces of indication information #4 from the network device. If the terminal device receives one piece of indication information #4, the indication information #4 may indicate whether the terminal device separately sends, at periodicities corresponding to the multiple pieces of information included in the first information, multiple pieces of information included in the first information. If the terminal device receives multiple pieces of indication information #4, the multiple pieces of indication information #4 separately indicate whether the terminal device sends, at periodicities corresponding to multiple pieces of information included in the first information, the multiple pieces of information included in the first information.

For example, the indication information #3 and the indication information #4 may be same indication information, and the same indication information is denoted as the fourth indication information. The fourth indication information indicates that the terminal device sends the first information to the network device at the fourth periodicity in the monitoring period of the first wake-up signal, the fourth indication information indicates that the terminal device sends the first information to the network device at the third periodicity in the monitoring period of the first wake-up signal, or the fourth indication information indicates the terminal device does not send the first information to the network device in the monitoring period of the first wake-up signal.

Manner 1 and Manner 2 may also be used in combination. The terminal device sends a part of information in the first information in Manner 1, and the terminal device sends the remaining part of information in the first information in Manner 2. For example, the terminal device may send, to the network device at the DRX cycle in the DRX inactive time period and in the running time period of the on duration timer, p-CSI including L1-RSRP on a PUCCH and/or p-CSI not including the L1-RSRP on the PUCCH included in the first information, and the terminal device does not send, in the DRX inactive time period, other SRSs and CSI included in the first information. For example, the terminal device does not send a p-SRS, an sp-SRS, sp-CSI on the PUCCH, and sp-CSI configured on a PUSCH in the DRX inactive time period. The terminal device sends, at the fourth periodicity in the DRX active time period, any one or more pieces of information included in the first information.

For example, whether the terminal device sends, to the network device, the p-CSI including the L1-RSRP on the PUCCH included in the first information may be configured based on indication information #3-1. If the indication information #3-1 is configured as true, the terminal device sends, to the network device, the p-CSI including the L1-RSRP on the PUCCH. If the indication information #3-1 is not configured as true, the terminal device does not send, to the network device, the p-CSI including the L1-RSRP on the PUCCH. Whether the terminal device sends, to the network device, the p-CSI not including the L1-RSRP on the PUCCH included in the first information may be configured based on indication information #3-2. If the indication information #3-2 is configured as true, the terminal device sends, to the network device, the p-CSI not including the L1-RSRP on the PUCCH. If the indication information #3-2 is not configured as true, the terminal device does not send, to the network device, the p-CSI not including the L1-RSRP on the PUCCH.

That the terminal device is in the DRX inactive time period in Manner 1 and Manner 2 may be understood as any one or more of the following:
The terminal device is in a state of monitoring the first wake-up signal, the terminal device is not in the DRX active time period, the terminal device is not in a running time period of a first timer, the terminal device operates by using the second module, the terminal device operates by using the wake-up circuit, the terminal device monitors the first wake-up signal, the terminal device monitors a signal modulated through OOK, the terminal device is in a monitoring time period of the first wake-up signal, the terminal device is not in a state of monitoring a PDCCH, the terminal device does not operate by using the first module, the terminal device does not operate by using a main circuit, the terminal device does not monitor the PDCCH, or the like.

That the terminal device is in the DRX active time period in Manner 1 and Manner 2 may be understood as any one or more of the following:
The terminal device is in a state of monitoring the PDCCH, the terminal device is not in the DRX inactive time period, the terminal device is in the running time period of the first timer, the terminal device operates by using the first module, the terminal device operates by using a main circuit, the terminal device is monitoring the PDCCH, or the like.

An implementation of the DRX active time period is: The DRX active time period may be the running time period of the first timer. Specifically, the terminal device detects the first wake-up signal associated with the terminal device; the terminal device starts the first timer in response to detecting the first wake-up signal; and the terminal device sends the first information to the network device in the running time period of the first timer.

For example, the first timer may be any one of the drx-onDurationTimer, the drx-InactivityTimer, or the drx-RetransmissionTimer. This is not limited in this application.

Another implementation of the DRX active time period is: The terminal device detects the first wake-up signal associated with the terminal device, where the first wake-up signal carries fifth indication information, and the fifth indication information indicates that the terminal device sends the first information; and the terminal device receives sixth indication information from the network device, where the sixth indication information indicates that the terminal device stops sending the first information, or the sixth indication information indicates that the terminal device does not send the first information.

After receiving the fifth indication information, the terminal device may immediately turn on the first module to send the first information; or the fifth indication information may further indicate time at which the terminal device sends the first information, and the terminal device may wait, after receiving the fifth indication information, until the time at which the terminal device sends the first information indicated by the fifth indication information, and then turn on the first module to send the first information. This is not limited in this application. Similarly, after receiving the sixth indication information, the terminal device may immediately stop sending the first information; or the sixth indication information may further indicate time at which the terminal device stops sending the first information, and the terminal device may wait, after receiving the sixth indication information, until the time at which the terminal device stops sending the first information indicated by the third indication information, and then stop sending the first information. This is not limited in this application.

Step S512: The network device obtains channel information based on the first information.

For example, the network device may perform uplink channel estimation based on the p-SRS, the sp-SRS, or the like, to obtain uplink channel information; and the network device may obtain downlink channel information based on the sp-CSI on the PUCCH, the sp-CSI configured on the PUSCH, the p-CSI on the PUCCH, or the like.

When the terminal device operates in the DRX mechanism, the terminal device can feed back the channel information to the network device according to the communication method 500, so that power consumption of the terminal device can be reduced, and communication performance can also be ensured.

In addition, in the DRX mechanism, the terminal device needs to periodically start the on duration timer to monitor the PDCCH. Actually, the PDCCH cannot be detected in all running time periods of the on duration timer. Therefore, the terminal device does not need to start the on duration timer every time. To further reduce power consumption of the terminal device, a second wake-up signal is introduced. The second wake-up signal indicates whether the terminal device needs to start at least one on duration timer, and the at least one on duration timer is associated with the second wake-up signal detected by the terminal device.

For example, the second wake-up signal may be a PDCCH WUS, downlink control information (downlink control information, DCI), DCI with cyclic redundancy code scrambled by power saving-radio network temporary identifier (DCI with cyclic redundancy code scrambled by power saving-radio network temporary identifier, DCP), or the like.

If all monitoring occasions of the second wake-up signal are in the DRX active time period, the terminal device does not monitor the second wake-up signal and starts the at least one on duration timer; if all monitoring occasions of the terminal device are not in the DRX active time period, the terminal device monitors the second wake-up signal, and the detected second wake-up signal indicates whether the at least one on duration timer needs to be started. This application may provide a method 600 for the terminal device to determine whether all the monitoring occasions of the second wake-up signal are in the DRX active time period.

The terminal device may determine, based on third information, whether all the monitoring occasions of the second wake-up signal are in the DRX active time period. For example, the third information includes at least one of the following:
whether the terminal device detects the first wake-up signal until a time period of a fifth time length prior to a last monitoring occasion of the second wake-up signal;
whether the terminal device receives an uplink grant, a downlink assignment, a DRX Command MAC CE, or a Long DRX Command MAC CE from the network device until a time period of a sixth time length prior to the last monitoring occasion of the second wake-up signal; and
whether the terminal device sends SR signaling to the network device until a time period of a seventh time length prior to the last monitoring occasion of the second wake-up signal.

Optionally, the terminal device may determine, based on the third information, that all the monitoring occasions of the second wake-up signal are in the DRX active time period. The second information includes at least one of the following:

The terminal device detects the first wake-up signal until a time period of the fifth time length prior to the last monitoring occasion of the second wake-up signal;
the terminal device receives the uplink grant, the downlink assignment, the DRX Command MAC CE, or the Long DRX Command MAC CE from the network device until a time period of the sixth time length prior to the last monitoring occasion of the second wake-up signal; and
the terminal device sends the SR signaling to the network device until a time period of the seventh time length prior to the last monitoring occasion of the second wake-up signal.

Whether the terminal device detects the first wake-up signal is: whether the terminal device detects the first wake-up signal associated with the terminal device, that is, whether the first wake-up signal indicates that the terminal device wakes up. For example, all the monitoring occasions of the second wake-up signal are all DCP monitoring occasions (DCP occasion(s)).

The fifth time length is greater than or equal to the fourth time length, the sixth time length may be 4 ms, and the seventh time length may be 4 ms. This is not limited in this application.

For example, the last monitoring occasion of the second wake-up signal corresponds to a symbol 6. If the terminal device receives the uplink grant from the network device on a time domain symbol 1 or a time domain symbol 2, the terminal device determines that symbols corresponding to all the monitoring occasions of the second wake-up signal are in the DRX active time period. Alternatively, the last monitoring occasion of the second wake-up signal corresponds to a symbol 6. If the terminal device receives the DRX Command MAC CE from the network device on the time domain symbol 1 or the time domain symbol 2, the terminal device determines that the symbol corresponding to the last monitoring occasion of the second wake-up signal is in the DRX active time period.

The terminal device may send the first information to the network device in the running time period of the at least one started on duration timer.

In addition, this application may further provide a method in which the first wake-up signal and the second wake-up signal are used in combination. A plurality of terminal devices in a first terminal device group detect the first wake-up signal, where the first wake-up signal is used for waking up the plurality of terminal devices in the first terminal device group. The plurality of terminal devices in the first terminal device group start the first timer in response to detecting the first wake-up signal, and continue to monitor the second wake-up signal in the running time period of the first timer, where the second wake-up signal is used for waking up a first terminal device in the plurality of terminal devices in the first terminal device group. The plurality of terminal devices in the first terminal device group detect the second wake-up signal. The first terminal device starts, in response to detecting the second wake-up signal, the at least one on duration timer associated with the second wake-up signal; and another terminal device in the first terminal device group other than the first terminal device stops running the first timer in response to detecting the second wake-up signal, and switches from the first module back to the second module to operate.

The first terminal device may send the first information to the network device in the running time period of the at least one started on duration timer.

Finally, apparatus embodiments in embodiments of this application are described.

To implement functions in the methods provided in this application, both a terminal device and a network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

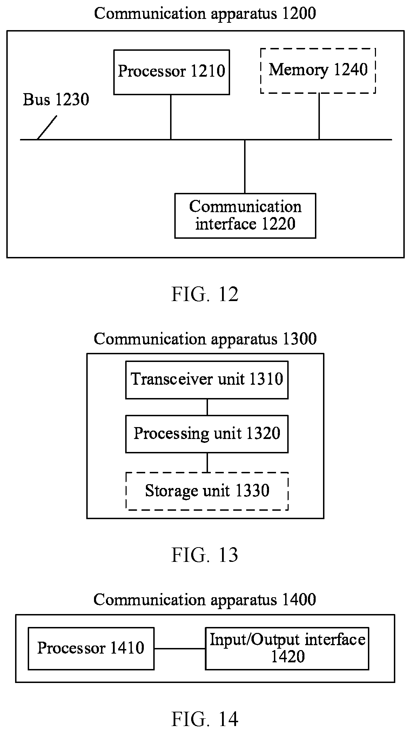

FIG. 12 is a block diagram of a communication apparatus 1200 according to an embodiment of this application. The communication apparatus 1200 includes a processor 1210 and a communication interface 1220. Optionally, the processor 1210 and the communication interface 1220 may be connected to each other through a bus 1230. The communication apparatus 1200 may be a terminal device or a network device.

Optionally, the communication apparatus 1200 may further include a memory 1240. The memory 1240 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1240 is configured to store related instructions and data.

The processor 1210 may be one or more central processing units (central processing unit, CPU). When the processor 1210 is one CPU, the CPU may be a single-core CPU, or may be a multi-core CPU.

When the communication apparatus 1200 is a terminal device, for example, the communication apparatus 1200 is configured to perform the following operation: sending first information to a network device in a first time period.

When the communication apparatus 1200 is a network device, for example, the communication apparatus 1200 is configured to perform the following operation: receiving first information from a terminal device in a first time period, or obtaining channel information based on the first information.

The foregoing content is merely used as an example for description. When the communication apparatus 1200 is the terminal device/the network device, the communication apparatus 1200 is responsible for performing the methods or steps related to the terminal device/the network device in the foregoing method embodiments.

The foregoing descriptions are merely examples. For specific content, refer to the content shown in the method embodiments. For an implementation of each operation in FIG. 12, refer to the corresponding descriptions of the method embodiments shown in FIG. 3 to FIG. 11a and FIG. 11b.

FIG. 13 is a block diagram of a communication apparatus 1300 according to an embodiment of this application. The communication apparatus 1300 may be a terminal device or a network device, or may be a chip or a module in a terminal device or a network device, and is configured to implement the methods in the foregoing embodiments. The communication apparatus 1300 includes a transceiver unit 1310 and a processing unit 1320. The following describes the transceiver unit 1310 and the processing unit 1320 by using examples.

The transceiver unit 1310 may include a sending unit and a receiving unit. The sending unit is configured to perform a sending action of the communication apparatus 1300, and the receiving unit is configured to perform a receiving action of the communication apparatus 1300. For ease of description, in embodiments of this application, the sending unit and the receiving unit are combined into one transceiver unit. Unified descriptions are provided herein, and details are not described below again.

When the communication apparatus 1300 is a terminal device, for example, the transceiver unit 1310 is configured to send first information to a network device in a first time period.

When the communication apparatus 1300 is a network device, for example, the transceiver unit 1310 is configured to receive first information from a terminal device in a first time period, and the processing unit 1320 is configured to obtain channel information based on the first information.

The foregoing content is merely used as an example for description. When the communication apparatus 1300 is the terminal device/the network device, the communication apparatus 1300 is responsible for performing the methods or steps related to the terminal device/the network device in the foregoing method embodiments.

Optionally, the communication apparatus 1300 further includes a storage unit 1330, and the storage unit 1330 is configured to store a program or code for performing the foregoing methods.

The apparatus embodiments shown in FIG. 12 and FIG. 13 are used for implementing the content described in FIG. 3 to FIG. 11a and FIG. 11b. For specific execution steps and methods of the apparatuses shown in FIG. 12 and FIG. 13, refer to the content described in the foregoing method embodiments.

FIG. 14 is a block diagram of a communication apparatus 1400 according to an embodiment of this application. The communication apparatus 1400 is configured to implement functions of a terminal device/a network device. The communication apparatus 1400 may be a chip in a terminal device/a network device.

The communication apparatus 1300 includes an input/output interface 1420 and a processor 1410. The input/output interface 1420 may be an input/output circuit. The processor 1410 may be a signal processor, a chip, or another integrated circuit that can implement the methods in this application. The input/output interface 1420 is configured to input or output a signal or data.

For example, when the communication apparatus 1400 is a terminal device, the input/output interface 1420 is configured to send first information to a network device in a first time period.

For example, when the communication apparatus 1400 is a network device, the input/output interface 1420 is configured to receive first information from a terminal device in a first time period, and the processor 1410 is configured to obtain channel information based on the first information.

In a possible implementation, the processor 1410 executes instructions stored in a memory, to implement the functions implemented by the terminal device or the network device.

Optionally, the communication apparatus 1400 further includes the memory.

Optionally, the processor and the memory are integrated together.

Optionally, the memory is outside the communication apparatus 1400.

In a possible implementation, the processor 1410 may be a logic circuit, and the processor 1410 inputs/outputs a message or signaling through the input/output interface 1420. The logic circuit may be a signal processor, a chip, or another integrated circuit that can implement the methods in embodiments of this application.

The foregoing descriptions of the communication apparatus 1400 are merely an example for description. The communication apparatus 1400 can be configured to perform the methods in the foregoing embodiments. For specific content, refer to the descriptions of the foregoing method embodiments. Details are not described herein again.

This application further provides a chip. The chip includes a processor, configured to invoke instructions from a memory and run the instructions stored in the memory, to cause a communication device on which the chip is installed to perform the methods in the foregoing examples.

This application further provides a chip. The chip includes an input interface, an output interface, and a processor. The input interface, the output interface, and the processor are connected through an internal connection path. The processor is configured to execute code in a memory; and when the code is executed, the processor is configured to perform the methods in the foregoing examples. Optionally, the chip further includes the memory. The memory is configured to store a computer program or the code.

This application further provides a processor, configured to be coupled to a memory, and configured to perform the methods and the functions related to the terminal device or the network device in any one of the foregoing embodiments.

This application provides a computer program product including instructions. When the computer program product runs on a computer, the methods in the foregoing embodiments are implemented.

This application further provides a computer program. When the computer program runs on a computer, the methods in the foregoing embodiments are implemented.

This application further provides a computer-readable storage medium. The computer-readable storage medium stores a computer program. When the computer program is executed by a computer, the methods in the foregoing embodiments are implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In several embodiments provided in this application, the disclosed system, apparatus, and method may be implemented in another manner. For example, the foregoing described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the technical solutions of embodiments of this application.

In addition, functional units in embodiments of this application may be integrated into one processing unit, or each unit may exist alone physically, or two or more units may be integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
sending first information to a network device in a first time period, wherein the first time period comprises a monitoring period of a first wake-up signal and/or a wake-up time period indicated by the first wake-up signal, the first wake-up signal is used for waking up a terminal device, and the first information is used for obtaining channel information.

2. The method according to claim 1, wherein the sending the first information to the network device in the first time period comprises:
skipping sending the first information in the monitoring period of the first wake-up signal, and sending the first information in the wake-up time period indicated by the first wake-up signal.

3. The method according to claim 2, wherein the skipping sending the first information in the monitoring period of the first wake-up signal comprises: skipping sending the first information in the monitoring period of the first wake-up signal and in a discontinuous reception DRX on duration time period.

4. The method according to claim 1, wherein the sending the first information to the network device in the first time period comprises:
sending the first information at a first periodicity in the monitoring period of the first wake-up signal, and sending the first information at a second periodicity in the wake-up time period indicated by the first wake-up signal, wherein the first periodicity is greater than the second periodicity.

5. The method according to any one of claims 1 to 4, wherein the method further comprises:
receiving first indication information from the network device, wherein the first indication information indicates whether the terminal device sends the first information in the monitoring period of the first wake-up signal, or the first indication information indicates whether the terminal device sends the first information in the monitoring period of the first wake-up signal and in the DRX on duration time period, or the first indication information indicates that the terminal device sends the first information at the first periodicity in the monitoring period of the first wake-up signal.

6. The method according to claim 5, wherein
if the first indication information indicates that the terminal device sends the first information in the monitoring period of the first wake-up signal, the first indication information further indicates that the terminal device sends, in the monitoring period of the first wake-up signal, first-type information comprised in the first information; or
if the first indication information indicates that the terminal device sends the first information in the monitoring period of the first wake-up signal and in the DRX on duration time period, the first indication information further indicates that the terminal device sends, in the monitoring period of the first wake-up signal and in the DRX on duration time period, first-type information comprised in the first information.

7. The method according to claim 5 or 6, wherein if the first indication information indicates that the terminal device sends the first information in the monitoring period of the first wake-up signal, the method further comprises: skipping sending, by the terminal device in the monitoring period of the first wake-up signal, second-type information comprised in the first information;
or
if the first indication information indicates that the terminal device sends the first information in the monitoring period of the first wake-up signal and in the DRX on duration time period, the method further comprises: skipping sending, by the terminal device in the monitoring period of the first wake-up signal and in the DRX on duration time period, second-type information comprised in the first information.

8. The method according to claim 6 or 7, wherein
the first-type information comprises periodic CSI comprising L1-reference signal received power RSRP on a PUCCH and/or periodic CSI not comprising the L1-RSRP on the PUCCH; and
the second-type information comprises one or more of the following:
a periodic sounding reference signal SRS;
a semi-persistent SRS;
semi-persistent channel state information CSI on the physical uplink control channel PUCCH; and
semi-persistent CSI on a physical uplink shared channel PUSCH.

9. The method according to any one of claims 2 to 8, wherein the skipping sending the first information in the monitoring period of the first wake-up signal comprises:
skipping sending the first information in the monitoring period of the first wake-up signal and not in the DRX on duration time period.

10. The method according to any one of claims 1 to 9, wherein the wake-up time period indicated by the first wake-up signal is a running time period of a first timer, and the first timer is started by the terminal device in response to detecting the first wake-up signal.

11. The method according to any one of claims 1 to 9, wherein the method further comprises:
detecting the first wake-up signal, wherein the first wake-up signal carries second indication information, and the second indication information indicates that the terminal device sends the first information to the network device in the wake-up time period indicated by the first wake-up signal.

12. The method according to claim 11, wherein the method further comprises:
receiving third indication information from the network device, wherein the third indication information indicates that the terminal device stops sending the first information.

13. The method according to any one of claims 2 to 12, wherein being in monitoring period of the first wake-up signal comprises at least one of the following:
being in a state of monitoring the first wake-up signal, or not being in the wake-up time period indicated by the first wake-up signal.

14. The method according to any one of claims 2 to 13, wherein being in the wake-up time period indicated by the first wake-up signal comprises at least one of the following:
being in a state of monitoring a physical downlink control channel PDCCH, or not being in the monitoring period of the first wake-up signal.

15. The method according to any one of claims 1 to 14, wherein the first information comprises at least one of the following:
the periodic sounding reference signal SRS;
the semi-persistent SRS;
the semi-persistent channel state information CSI on the physical uplink control channel PUCCH;
the semi-persistent CSI on the physical uplink shared channel PUSCH; and
periodic CSI on the PUCCH.

16. The method according to claim 15, wherein the periodic CSI on the PUCCH comprises at least one of the following:
the periodic CSI comprising the L1-reference signal received power RSRP on the PUCCH; and
the periodic CSI not comprising the L1-RSRP on the PUCCH.

17. The method according to any one of claims 4 to 16, wherein the first information sent in the monitoring period of the first wake-up signal comprises at least one of the following:
the periodic CSI comprising the L1-reference signal received power RSRP on the PUCCH; and
the periodic CSI not comprising the L1-RSRP on the PUCCH.

18. The method according to any one of claims 2 to 17, wherein the first information sent in the wake-up time period indicated by the first wake-up signal comprises at least one of the following:
the periodic sounding reference signal SRS;
the semi-persistent SRS;
the semi-persistent channel state information CSI on the physical uplink control channel PUCCH;
the semi-persistent CSI on the physical uplink shared channel PUSCH;
the periodic CSI comprising the L1-reference signal received power RSRP on the PUCCH; and
the periodic CSI not comprising L1-RSRP on the PUCCH.

19. A communication method, wherein a terminal device operates in a discontinuous reception DRX mechanism, and the method comprises:
determining, based on second information, whether a current time domain position is in a DRX active time period; and
the second information comprises at least one of the following:
a first wake-up signal detected until a time period of a first time length prior to the current time domain position, wherein the first wake-up signal is used for waking up the terminal device;
an uplink grant, a downlink assignment, a DRX command medium access control control element MAC CE, or a long DRX command MAC CE received from a network device until a time period of a second time length prior to the current time domain position; and
a scheduling request SR signaling sent to the network device until a time period of a third time length prior to the current time domain position.

20. A communication method, wherein a terminal device operates in a discontinuous reception DRX mechanism, and the method comprises:
determining, based on third information, whether all monitoring occasions of a second wake-up signal are in a DRX active time period, wherein the second wake-up signal indicates whether the terminal device starts at least one on duration timer; and
if it is determined that all the monitoring occasions of the second wake-up signal are in the DRX active time period, starting the at least one on duration timer, wherein
the third information comprises at least one of the following:
a first wake-up signal detected until a time period of a fifth time length prior to a last monitoring occasion of the second wake-up signal, wherein the first wake-up signal is used for waking up the terminal device;
an uplink grant, a downlink assignment, a DRX command medium access control control element MAC CE, or a long DRX command MAC CE received from a network device until a time period of a sixth time length prior to the last monitoring occasion of the second wake-up signal; and
a scheduling request SR signaling sent to the network device until a time period of a seventh time length prior to the last monitoring occasion of the second wake-up signal.

21. A communication method, wherein the method comprises:
receiving first information from a terminal device in a first time period, wherein the first time period comprises a monitoring period of a first wake-up signal and/or a wake-up time period indicated by the first wake-up signal, and the first wake-up signal is used for waking up the terminal device; and
obtaining channel information based on the first information.

22. The method according to claim 21, wherein the receiving the first information from the terminal device in the first time period comprises:
sending the first wake-up signal to the terminal device in the monitoring period of the first wake-up signal, wherein the monitoring period of the first wake-up signal is a time period in which the terminal device does not send the first information; and
receiving the first information in the wake-up time period indicated by the first wake-up signal.

23. The method according to claim 21, wherein the receiving the first information from the terminal device in the first time period comprises:
receiving the first information at a first periodicity in the monitoring period of the first wake-up signal, and receiving the first information at a second periodicity in the wake-up time period indicated by the first wake-up signal, wherein the first periodicity is greater than the second periodicity.

24. The method according to claim 22 or 23, wherein the method further comprises:
sending first indication information to the terminal device, wherein the first indication information indicates that the terminal device does not send the first information in the monitoring period of the first wake-up signal, or the first indication information indicates that the terminal device sends the first information at the first periodicity in the monitoring period of the first wake-up signal.

25. The method according to any one of claims 21 to 24, wherein the wake-up time period indicated by the first wake-up signal is a running time period of a first timer, and the first timer is started by the terminal device in response to detecting the first wake-up signal.

26. The method according to any one of claims 21 to 24, wherein the method further comprises:
sending the first wake-up signal to the terminal device, wherein the first wake-up signal carries second indication information, and the second indication information indicates that the terminal device sends the first information in the wake-up time period indicated by the first wake-up signal.

27. The method according to claim 26, wherein the method further comprises:
sending third indication information to the terminal device, wherein the third indication information indicates that the terminal device stops sending the first information.

28. The method according to any one of claims 21 to 27, wherein the first information comprises at least one of the following:
a periodic sounding reference signal SRS;
a semi-persistent SRS;
semi-persistent channel state information CSI on a physical uplink control channel PUCCH;
semi-persistent CSI on a physical uplink shared channel PUSCH; and
periodic CSI on the PUCCH.

29. The method according to claim 28, wherein the periodic CSI on the PUCCH comprises at least one of the following:
periodic CSI comprising L1-reference signal received power RSRP on the PUCCH; and
periodic CSI not comprising the L1-RSRP on the PUCCH.

30. The method according to any one of claims 23 to 29, wherein the first information received in the monitoring period of the first wake-up signal comprises at least one of the following:
the periodic CSI comprising the L1-reference signal received power RSRP on the PUCCH; and
the periodic CSI not comprising the L1-RSRP on the PUCCH.

31. The method according to any one of claims 22 to 30, wherein the first information received in the wake-up time period indicated by the first wake-up signal comprises at least one of the following:
the periodic sounding reference signal SRS;
the semi-persistent SRS;
the semi-persistent channel state information CSI on the physical uplink control channel PUCCH;
the semi-persistent CSI on the physical uplink shared channel PUSCH;
the periodic CSI comprising the L1-reference signal received power RSRP on the PUCCH; and
the periodic CSI not comprising the L1-RSRP on the PUCCH.

32. A communication method, wherein the method comprises:
detecting a first wake-up signal, wherein the first wake-up signal carries second indication information, and the second indication information indicates that a terminal device sends first information in a wake-up time period indicated by the first wake-up signal; and
sending, based on the second indication information, the first information to a network device in the wake-up time period indicated by the first wake-up signal.

33. The method according to claim 32, wherein the method further comprises:
receiving third indication information from the network device, wherein the third indication information indicates that the terminal device stops sending the first information.

34. A communication method, wherein the method comprises:
sending a first wake-up signal to a terminal device, wherein the first wake-up signal carries second indication information, and the second indication information indicates that the terminal device sends first information in a wake-up time period indicated by the first wake-up signal;
receiving the first information from the terminal device in the wake-up time period indicated by the first wake-up signal; and
obtaining channel information based on the first information.

35. The method according to claim 34, wherein the method further comprises:
sending third indication information to the terminal device, wherein the third indication information indicates that the terminal device stops sending the first information.

36. A communication apparatus, wherein the communication apparatus is configured to perform the method according to any one of claims 1 to 18, the method according to claim 19, the method according to claim 20, the method according to any one of claims 21 to 31, the method according to claim 32 or 33, or the method according to claim 34 or 35.

37. A communication apparatus, comprising a processor, wherein the processor is configured to execute a computer program or instructions,
to cause the communication apparatus to perform the method according to any one of claims 1 to 18, the method according to claim 19, the method according to claim 20, the method according to any one of claims 21 to 31, the method according to claim 32 or 33, or the method according to claim 34 or 35.

38. A computer-readable storage medium, wherein the computer-readable storage medium stores a computer program or instructions, and when the computer program or the instructions are run on a computer,
the method according to any one of claims 1 to 18, the method according to claim 19, the method according to claim 20, the method according to any one of claims 21 to 31, the method according to claim 32 or 33, or the method according to claim 34 or 35 is performed.

39. A computer program product, comprising instructions, wherein when the instructions are run on a computer,
the method according to any one of claims 1 to 18, the method according to claim 19, the method according to claim 20, the method according to any one of claims 21 to 31, the method according to claim 32 or 33, or the method according to claim 34 or 35 is performed.
